# EUROPEAN PATENT SPECIFICATION

(11) **EP 1 343 641 B1**
(45) Date of publication and mention of the grant of the patent: **08.03.2006**
(21) Application number: 01271991.0
(22) Date of filing: 03.12.2001
(51) Int. Cl.: B60C 15/00, B60C 9/02, B60C 17/00, B60C 15/024, B29D 30/10

(54) **SELF-SUPPORTING TYRE FOR VEHICLE WHEELS AND METHOD FOR MANUFACTURING THE SAME**
SELBSTSTÜTZENDER REIFEN FÜR FAHRZEUGSRÄDER UND VERFAHREN ZUR HERSTELLUNG DESSELBEN
PNEUMATIQUE AUTO-PORTEUR POUR ROUES DE VEHICULES ET SON PROCEDE DE PRODUCTION

(30) Priority: 22.12.2000 EP 00830845; 02.02.2001 US 265616 P
(43) Date of publication of application: 17.09.2003
(73) Proprietor: PIRELLI PNEUMATICI S.p.A., 20126 Milano (IT)
(72) Inventor: CARETTA, Renato, I-21013 Gallarate (IT)
(74) Representative: Tansini, Elio Fabrizio
(86) International application number: PCT/EP2001/014100
(87) International publication number: WO 2002/051653

(56) References cited:
- EP-A- 0 475 258
- EP-A- 0 844 110
- EP-A- 0 976 535
- WO-A-99/64225
- US-A- 5 634 993

## Description

The present invention relates to a self-supporting tyre for vehicle wheels, comprising: a carcass structure having at least one carcass ply provided with end flaps in engagement with respective annular reinforcing structures disposed in coaxial relationship with a rotation axis of the tyre at positions axially spaced apart from each other and each incorporated into a tyre bead, at least one of said beads exhibiting, at a radially internal position thereof, a rest surface that, in a diametrical section plane of the tyre, defines a profile converging towards the rotation axis of the tyre itself away from an equatorial plane of the same; a belt structure applied to the carcass structure at a radially external position thereof; a tread band applied to the belt structure at a radially external position thereof; at least one pair of sidewalls each extending between one of said beads and a side edge of the tread band, at an axially external position with respect to the carcass structure.
The present invention also relates to a method of manufacturing a self-supporting tyre for vehicle wheels, comprising the steps of: preparing a carcass structure having at least one carcass ply provided with end flaps in engagement with respective annular reinforcing structures disposed in coaxial relationship with a rotation axis of the tyre at positions axially spaced apart from each other and each incorporated into a tyre bead, at least one of said beads exhibiting, at a radially internal position thereof, a rest surface that, in a diametrical section plane of the tyre, defines a profile converging towards the rotation axis of the tyre itself away from an equatorial plane thereof; applying a belt structure to the carcass structure at a radially external position thereof; applying a tread band to the belt structure at a radially external position of same; applying a pair of sidewalls to the carcass structure, at laterally opposite positions of the latter, each of said sidewalls extending between one of said beads and a side edge of the tread band.

Tyres for vehicle wheels essentially comprise a carcass structure made up of one or more carcass plies that, in the most typical solutions, have the respective inner circumferential edges turned up around inextensible annular inserts being part of annular reinforcing structures and placed at axially opposite positions in the regions usually identified as tyre "beads".
Applied to the carcass ply or plies, at a radially external position, is a belt structure comprising one or more belt layers radially superposed in succession. Radially superposed on the belt structure is a tread band of elastomer material. The outer sides of the carcass structure are also covered with respective sidewalls made of elastomer material as well.
It is to be pointed out that, to the aims of the present invention, by the term "elastomer material" it is intended a rubber blend in its entirety, that is the assembly made up of at least one base polymer suitably amalgamated with reinforcing fillers and/or process additives of various types.

Usually the tyre beads, and in particular the annular reinforcing structures incorporated thereinto, are conveniently structured and shaped so as to match with the respective circumferential seats arranged on a rim with which the tyre is to be associated, to ensure a steady connection between the two components of a wheel.

In more detail, coupling between each bead and the corresponding circumferential seat of the rim is of such a nature that the bead is constantly pushed, by effect of the tyre inflation pressure, against an abutment shoulder radially jutting out away from the rotation axis of the tyre and defining the axially external edge of the rim. At least in tubeless tyres, i.e. tyres devoid of an air tube, each circumferential seat for engagement of the bead has a frusto-conical surface, hereinafter referred to as "flange", having an extension converging towards the rotation axis on moving close to the equatorial plane of the tyre. Each bead, axially pushed away from the equatorial plane by effect of the inflation pressure, acts in axial thrust relationship against the respective flange so as to ensure a perfect air-tightness to the tyre.

Recently wheels for vehicles have been proposed in which the engagement seats of the tyre beads have a frusto-conical conformation with an extension converging towards the rotation axis away from the equatorial plane. An example of such a rim-tyre assembly is described in US patent 5,634,993. In the embodiment proposed in such a patent, the tyre beads the shape of which matches that of the corresponding rim seats, have annular reinforcing structures comprising usual rings around which the end flaps of the carcass ply are axially turned up. As a whole the carcass structure, of the radial type, has a cross-section profile with a constant bending direction, the tangent of which close to the rings is substantially parallel to the equatorial plane.

In document US 5,971,047 a tyre is described which has beads particularly adapted for use on rims having frusto-conical flanges axially facing outwardly, hereinafter referred to, for the sake of simplicity, as "reverse-flange" rims.

The Applicant has already proposed, in document WO 99/64225, technical improvements particularly addressed to simplification of the production process for tyres provided with beads adapted for a reverse-flange rim.

It is the Applicant's feeling that the technical problem to be solved for the purposes of the present invention is to obtain further functional improvements in the above mentioned tyre, particularly in connection with ride comfort, by envisaging new technical solutions aiming at achieving the desired self-support qualities, i.e. the capability of ensuring ride over short-medium runs in the absence of inflation pressure, following a puncture for example.

In the above United States documents US 5,634,993 and US 5,971,047, for self-support purposes, use of a big ring of elastomer material is proposed which is fitted on the rim and arranged to provide a rest seat at the tyre belt to conveniently support the structure during running under deflated conditions. Unlike the solutions found in traditional tyres to be used on rims having flanges diverging away from the equatorial plane, hereinafter referred to as "right-flange" rims, the tyre structure having beads adapted for a reverse flange is capable of ensuring by itself, at least within limits, a good anchoring of the beads to the corresponding rim flanges even under deflated conditions of the tyre. Use of the elastomer support ring fitted on the rim is therefore presently preferred to the other known solutions commonly adopted on tyres having beads for right flanges, as described in documents GB 2087805, EP 475258 and EP 542252 for example, which obtain self-support by arranging appropriate elastomer reinforcement inserts, usually referred to as "lunettes" at the sidewalls, in combination with suitably strengthened beads to promote steadiness of engagement of the latter on the respective flanges.

Examples of such embodiments are described in documents GB 2087805, EP 475258 and EP 542252, in which at least one of the elastic-support inserts present at each sidewall is enclosed between two carcass plies forming a sort of closed container around it, so as to achieve good results particularly in connection with the self-supporting capability of the tyre under deflated conditions.

The Applicant has however understood that, above all on low-section tyres, i.e. tyres in which the height/width ratio is, just as an indication, lower than 0.60, the presence of the annular elastomer insert within the tyre as described in documents US 5,674,993 and US 5,971,047 may impair ride comfort of the tyre even under normal use conditions. In fact, the tyre crown portion may easily come into contact with the radially external portion of the annular insert, at the ground-contacting area, above all following impacts transmitted by unevennesses in the road surface, causing direct transmission of the impacts to the vehicle suspensions. In addition, the annular elastomer insert greatly reduces the amount of air in the tyre, the elastic behaviour of which is one of the decisive factors for ride comfort purposes.

The Applicant has also understood that location of the elastic-support inserts in a sort of closed container defined by the carcass plies turned up around the annular anchoring structures, as suggested in documents GB 2087805, EP 475258 and EP 542252, tends to greatly increase stiffness of the tyre sidewall not only with reference to its vertical flexibility, i.e. in connection with substantially radial stresses with respect to the rotation axis of the tyre, but also with reference to its torsional flexibility, i.e. in connection with stresses directed tangentially of the circumferential extension of the tyre itself.

By adopting particular expedients, as described in documents EP 475258 and EP 542252 in the name of the same Applicant for example, the possibility of restricting, within limits, the vertical stiffness of the sidewall under running conditions with an inflated tyre is achieved. On the other hand, these technical solutions tend to make the tyre structure heavier and more complicated and are not efficient for the purpose of limiting the torsional stiffness which, as found out by the Applicant, is one of the decisive factors in terms of ride comfort, particularly at medium/high speed. In fact, the tyre capability of absorbing impacts transmitted by potholes or other unevennesses present in a road surface depends on the torsional stiffness of the tyre.

The Applicant has also understood that during running under normal inflated conditions and, even more so, under deflated conditions, the presence of the elastic-support inserts completely enclosed between two carcass plies imposes strong stresses and/or deformations to the inserts themselves as well as to the other tyre construction components that are present close to the sidewalls, which will bring about an increase in the operating temperatures and softening of the materials. Thus use of materials having high moduli of elasticity is compulsory, in order to further increase ride comfort with an inflated tyre.

In accordance with the present invention, it has been found that if in tyres having reverse-flange beads technical solutions are adopted that aim at achieving self-support qualities through insertion of elastomer inserts within the sidewalls, instead of the traditional elastomer ring fitted on the rim, unexpected improvements in the tyre behaviour can be reached, above all in terms of ride comfort.

It has also been found that use of these technical solutions make it surprisingly possible to manufacture a tyre using simplified production processes based on the principles described in the above mentioned document WO 99/64225, also obtaining the possibility of modulating at will, depending on requirements, the containment degree exerted by the carcass structure on the elastomer inserts disposed at the sidewalls.

In more detail, it is an object of the present invention to provide a self-supporting tyre for vehicle wheels, as defined in claim 1. Such a tyre comprises at least one pair of elastic-support inserts incorporated into the carcass structure, each at one of said sidewalls.

More particularly, the elastic-support inserts have respective radially internal apices placed close to the beads, and radially external apices placed close to the side edges of the tread band.

According to the invention, said at least one carcass ply comprises: axially internal strip-like sections and axially external strip-like sections, said axially internal and axially external sections being circumferentially distributed around said rotation axis and each extending in a "U"-shaped configuration around the cross-section profile of the carcass structure, to define two side portions mutually spaced apart in an axial direction and a crown portion extending in a radially external position between the side portions, said elastic-support inserts being each axially interposed between side portions of the axially internal sections and side portions of the axially external sections.

Also provided may be the presence of axially intermediate strip-like sections circumferentially distributed around said rotation axis and each extending in a "U"-shaped configuration around the cross-section profile of the carcass structure to define two side portions overlapping, in an axially external position, said elastic-support inserts, and a crown portion extending in a radially external position between the side portions; a pair of auxiliary elastic-support inserts being each axially interposed between the side portions of the axially intermediate sections and the side portions of the axially external sections.

In more detail, the axially internal sections are preferably distributed according to a circumferential pitch corresponding to a multiple of their width, the axially intermediate sections are distributed according to a circumferential pitch corresponding to a multiple of their width and each have the respective crown portion interposed in circumferential approaching relationship between the crown portion of two axially internal sections, to define a first carcass ply therewith, and the axially external sections are distributed according to a circumferential pitch substantially corresponding to their width, to define a second carcass ply radially superposed on the first carcass ply close to said crown portions.

In addition to the above, the presence of second axially intermediate strip-like sections may be also provided, which second sections are circumferentially distributed around said rotation axis and each extend in a "U"-shaped configuration around the cross-section profile of the carcass structure to define two side portions partly overlapping, at an axially external position, the side portions of the first axially intermediate sections., and a crown portion extending in a radially external position between the respective side portions.

In a possible preferential alternative embodiment, the axially internal sections are distributed according to a circumferential pitch substantially corresponding to a multiple of their width, the first axially intermediate sections are distributed according to a circumferential pitch substantially corresponding to a multiple of their width, each with the respective crown portion interposed in circumferential approaching relationship between the crown portion of two axially internal sections, to define a first carcass ply therewith, the second axially intermediate sections are- distributed according to a circumferential pitch substantially corresponding to a multiple of their width, and the axially external sections are distributed according to a circumferential pitch substantially corresponding to a multiple of their width, each with the respective crown portion interposed in circumferential approaching relationship between the crown portions of two of said second axially intermediate sections, to define a second carcass ply therewith, which second carcass ply is radially superposed on the first carcass ply close to said crown portions.

According to a further preferential alternative embodiment, the axially internal sections are distributed according to a circumferential pitch substantially corresponding to their width, to define a first carcass ply, the axially intermediate sections are distributed according to a circumferential pitch corresponding to a multiple of their width and the axially external sections are distributed according to a circumferential pitch corresponding to a multiple of their width and each have the respective crown portion interposed in a circumferential approaching relationship between the crown portions of two axially intermediate sections, to define a second carcass ply therewith, which second carcass ply is radially superposed on the first carcass ply close to said crown portions.

The inner, intermediate and outer sections respectively can also be distributed according to a circumferential distribution pitch which is a multiple of their width in accordance with a numerical factor corresponding to the number of series of inner, intermediate and outer sections provided in the formation process of said at least one carcass ply.

Under this circumstance, the crown portions of the individual inner, intermediate and outer sections are sequentially alternated in mutual approaching relationship along one and the same circumferential line, whereas the respective side portions are axially offset from each other to house at least one of said elastic-support inserts in the spaces existing between the side portions of the inner and intermediate sections, and between the side portions of the intermediate and outer sections.

In accordance with a further alternative embodiment, the axially internal sections are distributed according to a circumferential pitch substantially corresponding to a multiple of their width, the axially intermediate sections are distributed according to a circumferential pitch substantially corresponding to a multiple of their width and each have the respective crown portion disposed circumferentially close to the crown portion of an axially internal section, and the axially external sections are distributed according to a circumferential pitch substantially corresponding to a multiple of their width, each with its crown portion in circumferential approaching relationship between the crown portion of one of the axially internal sections and the crown portion of one of the axially intermediate sections to define said at least one carcass ply therewith.

In a further possible embodiment, the axially internal sections are distributed according to a circumferential pitch substantially corresponding to a multiple of their width, the axially external sections each having the respective crown portion interposed in circumferential approaching relationship between the crown portions of two axially internal sections.

Alternatively, the axially internal sections and axially external sections are distributed according to a circumferential pitch corresponding to the width of each section, to define a first carcass ply and a second carcass ply respectively, the second carcass ply being radially superposed on the first carcass ply close to said crown portions.

Also provided may be the presence of a pair of auxiliary elastic-support inserts each disposed at an axially internal position with respect to the axially internal sections.

In a further preferential alternative embodiment, each of said strip-like sections substantially extends in a plane parallelly offset from a meridian plane of the tyre, so that the respective crown portion, with respect to a radial reference plane passing through the transition point between the crown portion and at least one of the corresponding side portions, is oriented in such a manner as to form an angle of a value different from the inclination exhibited by the side portions.

In more detail, the axially internal sections and axially external sections lie in deposition planes that at respectively opposite sides are offset from said meridian plane, so that at least the side portions of the axially internal sections have a crossed orientation relative to the side portions of the axially external sections.

In accordance with a further inventive aspect, at least one of said annular reinforcing structures comprises: at least one stiffening element applied against said at least one carcass ply and having a cross-section profile extending away from the rotation axis of the tyre; at least one annular circumferentially-inextensible anchoring insert having a cross section profile of flattened conformation, extending axially away from the stiffening element in a direction converging towards the geometric rotation axis of the tyre away from the equatorial plane thereof.

The cross-section profile of the annular reinforcing structure is advantageously provided to have a geometric centre of gravity located at such a position that an axially external end edge of said annular anchoring insert is pushed towards the rotation axis of the tyre following a tension generated along said at least one carcass ply by effect of the inflation pressure of the tyre.

In more detail, the cross-section profile of the annular reinforcing structure has a geometric centre of gravity located at an axially external position relative to said stiffening element and at an axially internal position relative to an axially external end edge of said annular anchoring insert.

Preferably, said stiffening element is axially positioned between a respective axially internal end flap and a respective axially external end flap of said at least one carcass ply.

Said annular anchoring insert is also provided to be applied against an end portion of the outer end flap, extending axially away from the equatorial plane of the tyre. In more detail, said annular anchoring insert is applied at a radially external position with respect to said end portion of the outer end flap.

It is also provided that the annular anchoring insert should be disposed substantially close to a radially internal edge of the stiffening element.

The annular reinforcing structure may further comprise at least one auxiliary annular anchoring insert parallel to and radially close to said annular anchoring insert.

Such an auxiliary anchoring insert is preferably applied at a radially external position with respect to an end portion of said inner end flap, and extends axially away from an equatorial plane of the tyre.

The auxiliary anchoring insert is preferably applied at a radially internal position relative to said end portion of the outer end flap.

The presence of at least one auxiliary circumferentially-inextensible stiffening element may be also provided, which auxiliary element has a cross-section profile radially extending at an axially internal position relative to said stiffening element.

It is a further object of the present invention a tyred wheel for vehicles comprising a mounting rim to be associated with a hub of a vehicle and a tyre mounted on said rim, said tyre comprising the above described features.

In accordance with a further aspect of the present invention, said tyre can be obtained by a method of manufacturing a self-supporting tyre for vehicle wheels, as defined in claim 27. According to such a method, concurrently with preparation of said at least one carcass ply, also carried out is a step of incorporating into the carcass structure at least one pair of elastic-support inserts, each at one of said sidewalls. Preparation of the carcass structure comprises the following steps: arranging strip-like sections each comprising longitudinal and parallel thread-like elements; laying down axially internal strip-like sections circumferentially distributed on the toroidal support, each of said axially internal sections extending in a "U"-shaped configuration around the cross-section profile of the toroidal support, to define two side portions that are mutually spaced apart in an axial direction, and a crown portion extending in a radially external position between the side portions; applying said elastic-support inserts in a position axially external to the side portions of the axially internal sections; laying down axially external strip-like sections circumferentially distributed on the toroidal support, each of said axially external sections extending in a "U"-shaped configuration around the cross-section profile of the toroidal support, to define two side portions that are mutually spaced apart in an axial direction, each extending in an axially external position relative to one of the elastic-support inserts, and a crown portion extending in a radially external position between the side portions.

In a possible embodiment, before laying down the axially external sections the following further steps are carried out: laying down axially intermediate strip-like sections circumferentially distributed around said rotation axis and each extending in a "U"-shaped configuration around the cross-section profile of the carcass structure to define two side portions overlapping, at an axially external position, said elastic-support inserts, and a crown portion extending in a radially external position between the side portions; applying a pair of auxiliary elastic-support inserts, at an axially external position, to the side portions of the axially intermediate sections, before deposition of the axially external sections.

In particular, it may be provided that the axially internal sections should be laid down according to a circumferential distribution pitch substantially corresponding to a multiple of their width, the axially intermediate sections should be laid down according.to a circumferential distribution pitch substantially corresponding to a multiple of their width, each with the respective crown portion interposed in a circumferential approaching relationship between the crown portions of two axially internal sections, to define a first carcass ply therewith, and the axially external sections should be laid down according to a circumferential distribution pitch substantially corresponding to their width, to define a second carcass ply therewith, which carcass ply is radially superposed on the first carcass ply.

In a possible preferential embodiment, before application of said auxiliary elastic-support insert, also carried out is the step of laying down second axially-intermediate strip-like sections circumferentially distributed around said rotation axis and each extending in a "U"-shaped configuration around the cross-seqtion profile of the toroidal support to define two side portions partly overlapping, at an axially external position, the side portions of the first axially intermediate sections previously laid down, and a crown portion extending in a radially external position between the respective side portions.

In particular, the axially internal sections are laid down according to a circumferential distribution pitch substantially corresponding to a multiple of their width, the first axially intermediate sections are laid down according to a circumferential distribution pitch substantially corresponding to a multiple of their width, each having the respective crown portion interposed in a circumferential approaching relationship between the crown portions of two axially internal sections, to define a first carcass ply therewith, the second axially intermediate sections are laid down according to a circumferential distribution pitch substantially corresponding to a multiple of their width, and the axially external sections are laid down according to a circumferential distribution pitch substantially corresponding to a multiple of their width, each having the respective crown portion interposed in a circumferential approaching relationship between the crown portions of two of said second axially intermediate sections, to define a second carcass ply therewith.

Alternatively, the axially internal sections are laid down according to a circumferential distribution pitch substantially corresponding to their width, to define a first carcass ply, the axially intermediate sections are laid down according to a circumferential distribution pitch substantially corresponding to a multiple of their width, and the axially external sections are laid down according to a circumferential distribution pitch substantially corresponding to a multiple of their width, each having the respective crown portion interposed in a circumferential approaching relationship between the crown portions of two of said intermediate sections, to define a second carcass ply therewith, which carcass ply is radially superposed on the first carcass ply close to said crown portions.

In a further possible embodiment, the axially internal sections are laid down according to a circumferential distribution pitch substantially corresponding to a multiple of their width, the axially intermediate sections are laid down according to a circumferential distribution pitch substantially corresponding to a multiple of their width, each having the respective crown portion disposed circumferentially close to the crown portion of an axially internal section, and the axially external sections are laid down according to a circumferential pitch substantially corresponding to a multiple of their width, each having its crown portion in circumferential approaching relationship between the crown portion of one of the axially internal sections and the crown portion of one of the axially intermediate sections, to define said at least one carcass ply therewith.

Alternatively, the axially internal sections are distributed according to a circumferential pitch substantially corresponding to a multiple of their width, the axially external.sections being each laid down with their crown portion in circumferential approaching relationship between the crown portions of two axially internal sections.

According to a further alternative embodiment, the axially internal sections are distributed according to a circumferential pitch substantially corresponding to their width to define a first carcass ply, and the axially external sections are distributed according to a circumferential pitch substantially corresponding to their width to define a second carcass ply radially superposed on the first carcass ply close to said crown portions.

Also preferably provided is the step of arranging a pair of auxiliary elastic-support inserts, each at an axially internal position relative to the axially internal sections.

In addition, each of said strip-like sections may be provided to be laid down in a plane parallelly offset from a meridian plane of the toroidal support.

In particular, the axially internal sections and axially external sections are respectively laid down in deposition planes that are offset at respectively opposite sides from said meridian plane, so that the side portions of the axially internal and axially external sections have respectively inclined orientations.

In accordance with a further inventive aspect, accomplishment of at least one of said annular anchoring structures comprises the steps of: applying at least one annular circumferentially-inextensible anchoring insert in radial superposed relationship with an end portion of at least one of said end flaps, said anchoring insert having a cross-section profile of flattened conformation extending axially away from the corresponding inner end flap and from an equatorial plane of the tyre; applying at least one stiffening element against said at least one end flap, said stiffening element being substantially placed at an axially internal position relative to said annular anchoring insert and having a cross-section profile extending away from said rotation axis.

Application of said annular anchoring insert preferably takes place by winding up of at least one thread-like element in concentric coils disposed axially close to each other around the toroidal support, and can be carried out subsequently to deposition of the axially external sections.

In a preferential embodiment, application of the stiffening element is carried out before application of the annular anchoring insert and before deposition of the axially external sections.

Application of said at least one stiffening element is also preferably provided to take place by winding up of at least one thread-like element in concentric coils that are radially superposed around the toroidal support.

Also carried out may be the further step of applying an auxiliary circumferentially-inextensible annular anchoring insert, disposed substantially parallel and radially close to said annular anchoring insert.

In particular, said auxiliary anchoring insert is preferably applied subsequently to deposition of the radially internal sections and before deposition of the radially external sections, by winding up of at least one thread-like element in concentric coils disposed axially close to each other around the toroidal support.

In accordance with a preferential embodiment, before applying said stiffening element, application of at least one auxiliary stiffening element radially extending in an axially internal position relative to the stiffening element itself, is carried out.

Application of said auxiliary stiffening element preferably takes place by winding up of at least one thread-like element in concentric coils disposed radially close to each other around the toroidal support.

It is also preferably provided that each of said elastic-support inserts should be formed by winding up at least one continuous strip-like element of elastomer material in the form of coils that are disposed axially close to, and/or radially superposed on, each other around the geometric axis of the toroidal support.

Further features and advantages will become more apparent from the detailed description of a preferred but not exclusive embodiment of a self-supporting tyre for vehicle wheels and a method of manufacturing the same, in accordance with the present invention. This description will be set out hereinafter with reference to the accompanying drawings, given by way of non-limiting example, in which:
- Fig. 1 is a fragmentary and split perspective view of a tyre made in accordance with the present invention, mounted on a respective rim;
- Fig. 2 diagrammatically shows a fragmentary perspective view of the deposition sequence of axially internal strip-like sections, designed to form a carcass ply of the tyre in accordance with the invention;
- Fig. 3 is a fragmentary perspective view of an elastic-support insert and an auxiliary stiffening element being part of an annular reinforcing structure, applied to one of the sides of the carcass structure;
- Fig. 4 is a fragmentary perspective view showing application of intermediate strip-like sections the side portions of which are placed in superposed relationship with the elastic-support insert and the auxiliary stiffening element previously applied;
- Fig. 5 is a fragmentary perspective view of an auxiliary anchoring insert and a stiffening element being part of the above mentioned annular reinforcing structure, as well as of an auxiliary elastic-support insert applied against the side portions of the first axially intermediate sections, in radial extension relationship with respect to the stiffening element;
- Fig. 6 is still a fragmentary perspective view showing axially external strip-like sections applied, at said respective side portions, against the auxiliary elastic-support insert, and an annular anchoring insert being part of the annular anchoring structure, applied against the end portions of the axially external sections;
- Fig. 7 is a cross half-section of the tyre made in accordance with the preceding figures;
- Fig. 8 is a diametrical half-section of a second embodiment of a tyre in accordance with the present invention;
- Fig. 9 is a diametrical section of a further alternative embodiment of a tyre in accordance with the present invention;
- Fig. 10 is a diametrical section of a fourth embodiment of the concerned tyre.

With reference to the drawings, a tyre for vehicle wheels having a carcass structure 2 made by a method in accordance with the present invention has been generally identified by reference numeral 1.

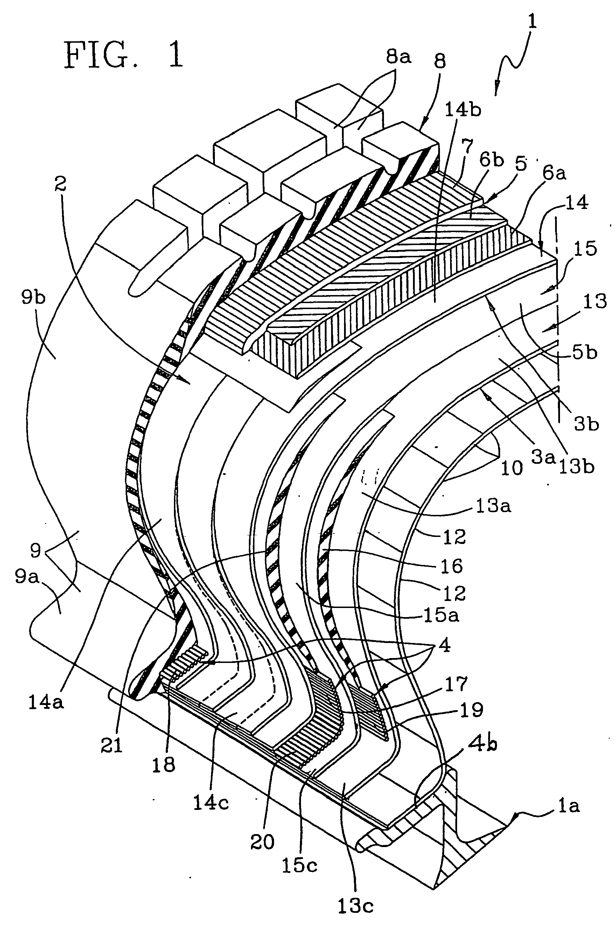

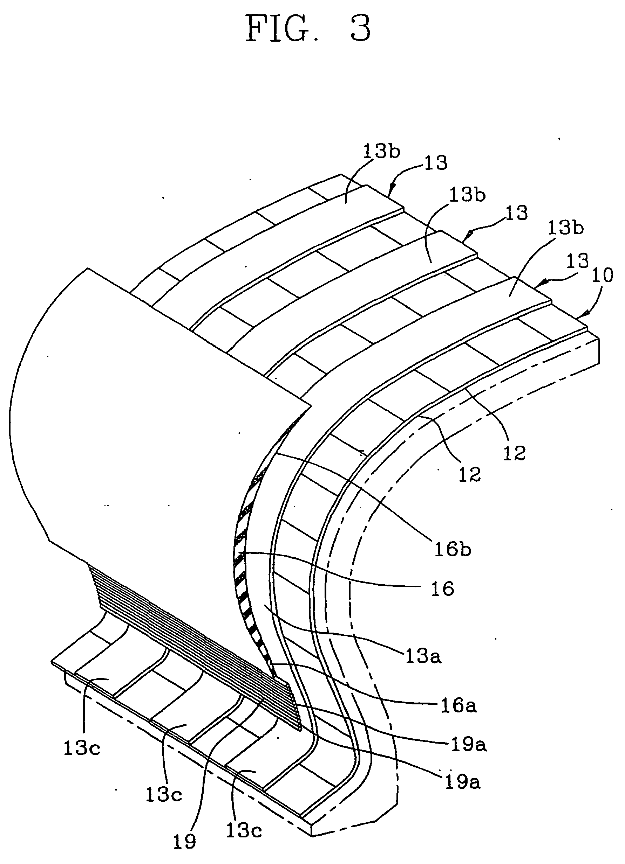

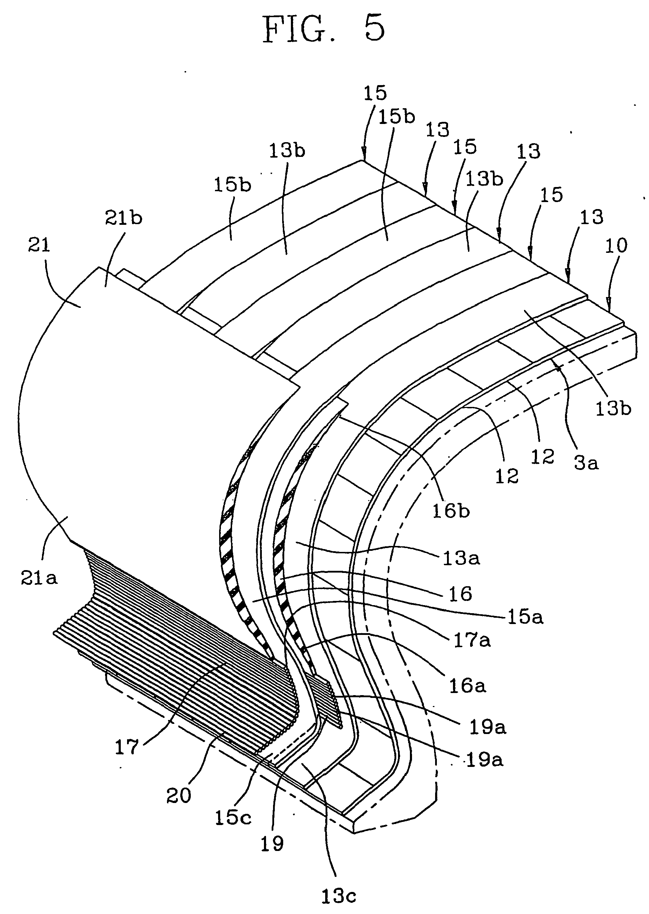

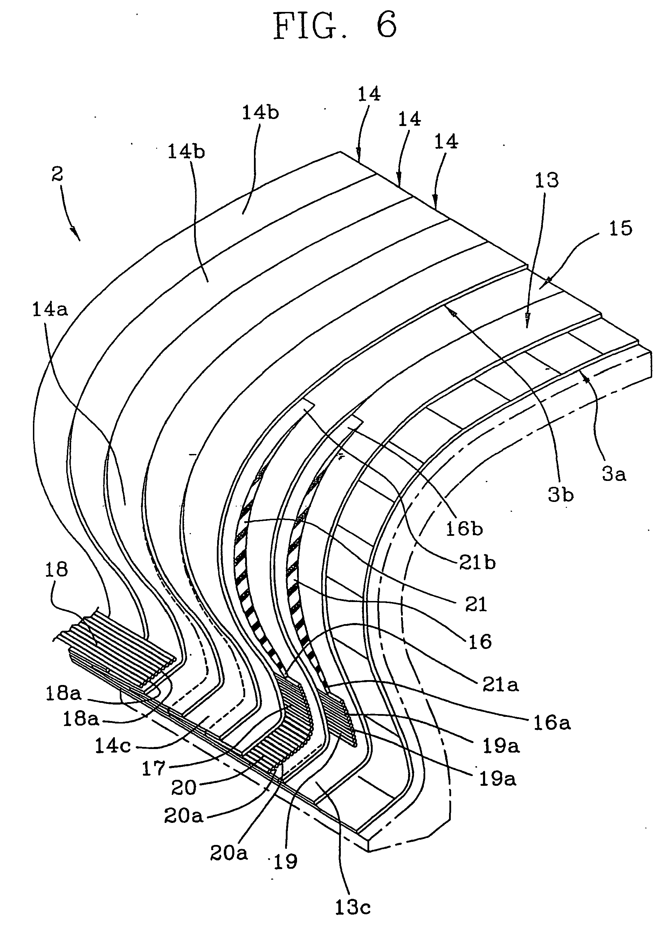

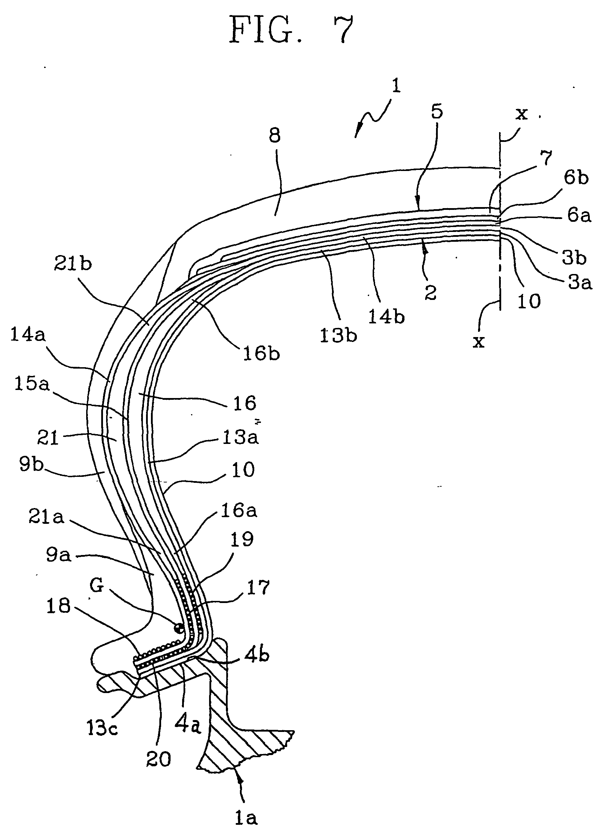

In the embodiment shown in Figs. 1 to 7, the carcass structure 2 has a first and a second carcass plies 3a, 3b shaped in a substantially toroidal conformation and in engagement, through their axially opposite circumferential edges, with a pair of annular anchoring structures 4 (only one of which is shown in the drawings), each of which is disposed, when the tyre manufacture has been completed, in the region usually defined as "bead" which, at a radially internal position, is provided with a rest surface 4a defining a profile converging, in a diametrical section plane of the tyre, towards the rotation axis of the tyre itself away from an equatorial plane X-X thereof.

Each rest surface 4a is adapted to operatively engage with an engagement seat 4b provided on a corresponding mounting rim 1a, to ensure anchoring of tyre 1 to the rim itself.

Applied to the carcass structure 2, at a radially external position, is a belt structure 4 comprising one or more belt strips 6a, 6b and 7. Circumferentially superposed on the belt structure 5 is a tread band 8 in which, following a moulding operation carried out concurrently with vulcanization of the tyre, longitudinal and transverse grooves 8a are formed and conveniently disposed to define the desired "tread pattern".

Tyre 1 also comprises a pair of so-called "sidewalls" 9, laterally applied to the carcass structure 2 on opposite sides and each comprising a radially internal portion 9a and a radially external portion 9b.

The carcass structure 2 may be optionally covered on its inner walls with a so-called "liner" 10 essentially consisting of at least one layer of air-tight elastomer material adapted to ensure the hermetic seal of the tyre when inflated.

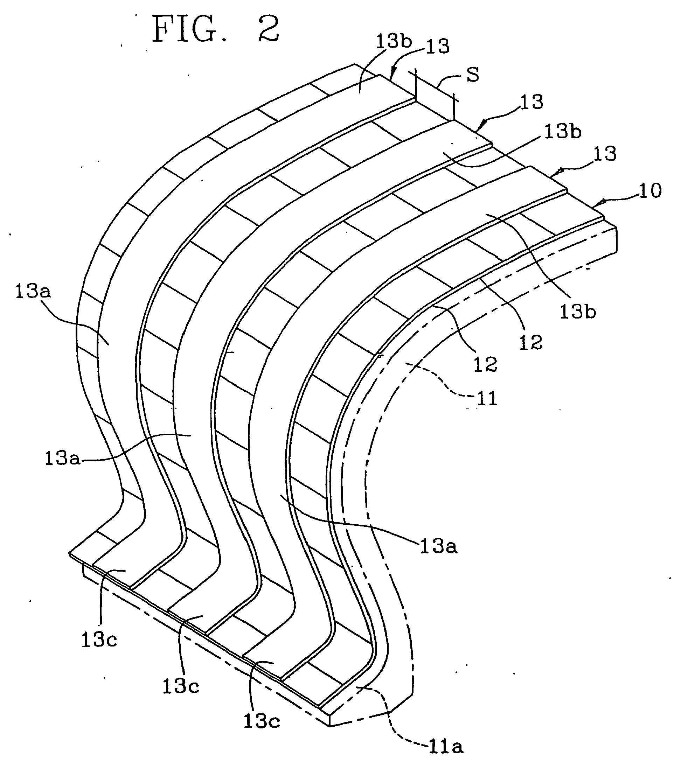

Assembling of the above listed components, as well as production of one or more of same, takes place with the aid of a toroidal support 11, diagrammatically shown in Figs. 2 to 6, shaped in accordance with the configuration of the inner walls of the tyre to be made.

In particular, such a toroidal support 11 has two axial expansions at a radially internal position thereof, which define frusto-conical rest surfaces 11a converging towards the rotation axis of the tyre away from an equatorial plane X-X of same, forming an angle just as an indication of 15° and preferably included between 10° and 20°, although values out of the above range are possible.

The toroidal support 11 may have reduced sizes as compared with those of the finished tyre, the linear value of the reduction being preferably included between 2% and 5% and being measured, just as an indication, along the circumferential extension of the toroidal support itself at its equatorial plane which is coincident with the equatorial plane X-X of the tyre.

The toroidal support 11, neither described nor shown in detail because it is not particularly important to the aims of the invention, may consist for example of a collapsible or dismountable drum, or of an inflatable bladder suitably strengthened to take and keep the desired toroidal conformation under inflated conditions.

All that being stated, manufacture of tyre 1 first involves formation of the carcass structure 2 beginning with possible formation of liner 10.

This liner 10 can be advantageously made by circumferentially winding up around the toroidal support 11, at least one ribbon-like band 12 of air-tight elastomer material, produced from an extruder and/or a calender located close to the toroidal support itself. As viewed from Fig. 1, winding of the ribbon-like band 12 substantially takes place with formation of circumferential coils disposed consecutively in side by side relationship so as to follow the cross-section profile of the outer surface of the toroidal support 11.

For the purposes of the present description by cross-section profile it is intended the configuration exhibited by the half-section of the toroidal support 11 taken in a radial plane containing the geometric rotation axis of the toroidal support itself, not shown in the drawings, which is coincident with the geometric rotation axis of the tyre and, consequently, of the carcass structure 2 being manufactured.

In accordance with the present invention, the carcass ply or plies 3a, 3b are directly formed on the toroidal support 11 by deposition,' as better clarified in the following, of strip-like sections that in the present description are identified as axially internal sections 13, axially external sections 14 and axially intermediate sections 15 respectively, depending on the position they have within the carcass structure 2.

The strip-like sections 13, 14, 15 are advantageously obtained from at least one continuous strip-like element preferably having a width included between 3 mm and 15 mm, essentially made up of longitudinally-disposed thread-like elements of textile or metallic material which are at least partly incorporated into one or more layers of elastomer material.

The continuous strip-like element may be advantageously produced from a calender or an extruder set up close to the toroidal support 11 on which tyre 1 is being formed, to be guided into a deposition apparatus lending itself to sequentially cut it so as to form the strip-like sections 13, 14, 15, concurrently with deposition of same on the toroidal support itself.

In more detail, the cutting operation of each strip-like section 13, 14, 15 is immediately followed by deposition of same on the toroidal support 11, the strip-like section taking a "U"-shaped configuration around the cross-section profile of the toroidal support itself. When deposition has taken place, in each strip-like section 13, 14, 15 it is possible to distinguish two side portions 13a, 14a, 15a radially extending towards the axis of the toroidal support 11, at positions axially spaced apart from each other, and a crown portion 13b, 14b, 15b extending in a radially external position between the side portions. It is to be noted that the side portions 13a, 14a, 15a conform in shape to the surface of the toroidal support 11 until close to the axially external edges of the respective frusto-conical rest surfaces 11a so as to define, in the carcass plies 3a, 3b, respective axially internal, intermediate and external end flaps that continue in the respective end portions 13c, 14c, 15c axially bent outwardly, i.e. away from the equatorial plane X-X, each in a direction preferably parallel to the respective frusto-conical rest surface 11a.

Stickiness of the preferably raw elastomer material employed in making the continuous strip-like element and therefore the strip-like sections 13, 14, 15 ensures a steady adhesion of said sections to the toroidal support surfaces 11 also in the absence of liner 10 on the toroidal support itself.

Further details concerning the structural features and modalities for manufacturing and laying down the continuous strip-like element and the strip-like sections 13, 14, 15 are described in documents EP 928 680 and EP 928 702, in the name of the same Applicant, contents of which are considered as herein completely incorporated.

The toroidal support 11 can be driven in angular rotation following a stepping movement in synchronism with operation of said deposition apparatus, in such a manner that the cutting action of each strip-like section 13, 14, 15 is followed by deposition of same to a circumferentially next position, either spaced apart or contiguous, with respect to the previously laid down section 13, 14, 15.

In more detail, rotation of the toroidal support 11 takes place according to steps of angular movement each of which gives rise to a circumferential displacement that, depending on requirements, can substantially correspond to the width of each strip-like section 13, 14, 15, or substantially correspond to a multiple of this width. Consequently, the strip-like sections 13, 14, 15 will be laid down according to a circumferential distribution pitch substantially corresponding to their width or a multiple thereof. It should be understood that, for the purposes of the present description, when not stated otherwise, the term "circumferential" refers to a circumference lying in the equatorial plane X-X and close to the outer surface of the toroidal support 11.

In particular, in the embodiment depicted in Figs. 1 to 7, the angular movement of the toroidal support 11 takes place in such a manner as to cause, by a first full revolution of the toroidal support around its own axis, deposition of the axially internal sections 13 circumferentially distributed according to a circumferential pitch equal to twice the width of each of them. Therefore, as clearly viewed from Fig. 2, between one of the axially internal sections 13 and the adjacent one an empty space or gap "S" is left that, at least at the crown portions 13b of the sections themselves, has a width substantially equal to that of said sections.

If required, deposition of the axially internal strip-like sections 13 may take place according to an orientation inclined to the circumferential extension direction of the toroidal support 11, by an angle included between 15° and 35° for example.

Adjustment of the deposition angle of the strip-like sections can be obtained for example by suitably orientating the geometric rotation axis of the toroidal support 11 relative to the deposition apparatus.

In addition, deposition of each axially internal section 13 as well as the subsequent deposition of the axially external sections 14 and/or intermediate sections 15 may be provided to be carried out in deposition planes parallelly offset from a meridian plane of the toroidal support 11, as described in patent application WO 00/38906 in the name of the same Applicant, contents of which are considered as herein completely incorporated. By so doing, each side portion 13a, 14a, 15a of each strip-like section 13, 14, 15 will form, with respect to a plane radial to the geometric axis of the toroidal support 11 passing through the transition point between the side portion itself and the respective crown portion 13b, 14b, 15b, an angle of a different value than the angle formed by the crown portion itself relative to the same radial plane. In particular, in this way it will be possible to give a desired inclination to each side portion 13a, 14a, 15a with respect to a direction radial to the geometric axis of the toroidal support 11, while keeping the crown portion 13b, 14b, 15b in a plane radial to the geometric axis itself.

When deposition of the axially internal sections 13 over the whole circumferential extension of the toroidal support 11 has been completed, manufacture of the carcass structure 2 goes on with the step of applying at least one pair of elastic-support inserts 16 (only one of which is shown in the accompanying figures), each to an axially external position against the side portions 13a of the axially internal sections 13. In more detail, as visible from the accompanying figures, each elastic-support insert 16, preferably having a hardness included between 67 and 91 IRHD, has a cross-section profile substantially in the form of a lunette, gradually tapering towards a radially internal apex thereof 16a, disposed close to the respective annular anchoring structure 4, and towards a radially external apex thereof 16b located, just as an indication, in a shoulder region of the tyre, where transition between the side portions 13a, 14a, 15a and crown portions 13b, 14b, 15b of the strip-like sections 13, 14, 15 takes place.

Advantageously, each of the elastic-support inserts 16 can be formed directly against the side portions 13a, by winding up a continuous strip of elastomer material forced through an extruder operating close to the toroidal support 11, in the form of coils that are disposed axially close to and/or radially superposed on each other.

The continuous strip will have the final conformation in section of the elastic-support insert 16 already on coming out of the respective extruder. However, the continuous strip should preferably have a smaller section than that of the elastic-support insert 16, the latter being obtained by applying the strip itself in the form of several coils disposed in side by side and/or superposed relationship, so as to define the reinforcing insert itself in its final configuration. For further details concerning accomplishment of each elastic-support insert 16 please refer to the description of patent application PCT/IT99/00376 and/or of patent application WO 00/35666, both in the name of the same Applicant.

Concurrently with formation of the elastic-support inserts 16 the step of making at least part of said inextensible annular structures 4 arranged close to each of the inner end flaps of the carcass ply or plies 3a, 3b is accomplished, for the purpose of obtaining the carcass regions, known as "beads", specifically designed to ensure anchoring of tyre 1 to the corresponding mounting rim la. In accordance with the present invention at least one of the annular reinforcing structures 4, and preferably both of them, are advantageously made as taught in document WO 99/64225 in the name of the same Applicant.

In more detail, each annular reinforcing structure 4 preferably comprises at least one stiffening element 17 applied against at least one of the carcass plies 3a, 3b and having a cross-section profile extending away from the rotation axis of tyre 1, and at least one annular circumferentially-inextensible anchoring insert 18 having a cross-section profile of flattened conformation extending axially away from the stiffening element 17, starting from a radially internal edge thereof. In more detail, the cross-section profile of the annular anchoring insert 18, preferably applied in radial superposed relationship to the end portion 14c of the axially external sections 14, extends in a direction converging towards the geometric axis of the tyre, away from the equatorial plane X-X of the latter, according to an angle preferably of 15° and at all events corresponding to the inclination present on the corresponding frusto-conical rest surface 11a.

Also preferably provided, for at least one of the annular reinforcing structures 4 and preferably for both of them, is an auxiliary circumferentially inextensible stiffening element 19, disposed parallel to the stiffening element 17 and having a cross-section profile radially extending in an axially internal position with respect to the stiffening element itself, as well as an auxiliary annular anchoring insert 20 extending parallel to the anchoring insert 18, at a radially internal position relative thereto.

There is such a mutual interaction between the annular anchoring inserts 18, 20, the stiffening elements 17, 19 and the remaining components of the carcass structure 2 that the annular anchoring inserts and stiffening elements are substantially in engagement with each other in an integral manner and, from an operating point of view, behave like a monolithic structure substantially having an "L"-shaped conformation with a radial leg represented by the stiffening elements 17, 19 and an axial leg represented by the annular anchoring inserts 18, 20. Such an "L"-shaped monolithic structure has a geometric centre of gravity G placed at an axially external position relative to the stiffening elements 17, 19 and at an axially internal position relative to the axially external end edge and the annular anchoring inserts 18, 20 so that the axially external end edge of the annular anchoring inserts 18, 20 will be pushed towards the rotation axis of the tyre, following a tension generated along the carcass ply or plies 3a, 3b by effect of the tyre inflation pressure, so as to ensure the tyre air-tightness. These features give the concerned tyre the functional behaviour and advantages widely described in the above mentioned document WO 99/64225 which is considered as herein completely incorporated.

All that being stated, in the embodiment shown in Figs. 1 to 7 it is provided that, concurrently with application of the elastic-support inserts 16 the auxiliary circumferentially-inextensible stiffening elements 19 should be applied, close to each of the circumferential inner flaps of the first carcass ply 3a being manufactured.

Each auxiliary stiffening element 19, substantially in the form of a crown concentric with the geometric rotation axis of the toroidal support 11, has a cross-section profile radially extending away from the rotation axis of the tyre and preferably is located at an axially external position against the side portions 13a of the axially internal sections 13, at the above mentioned end portions 13c.

The auxiliary stiffening element 19 is preferably made up of at least one metal strip-like element wound up in several substantially concentric coils 19a. Coils 19a may be defined by a continuous spiral or by concentric loops formed by respective strip-like elements.

Combined with each auxiliary stiffening element 19 may be an auxiliary filling body (not shown in the drawings) of elastomer material of appropriate hardness, radially extending from the auxiliary stiffening element itself so as to join the radially internal apex of the respective elastic-support insert 16.

In accordance with a preferential embodiment, the auxiliary stiffening element 19 is directly made against the end flaps of the strip-like sections 13, formation of coils 19a being carried out by winding up of the thread-like element possibly with the aid of rollers or other convenient means acting against the toroidal support surface.

Due to stickiness of the elastomer layer coating the strip-like sections 13 and the possible presence of liner 10 previously laid down on the toroidal support itself, steady positioning of the individual coils 19a as they are formed is ensured.

After application of the auxiliary stiffening elements 19 being part of the annular anchoring structures 4, formation of the first carcass ply 3a is completed by deposition of the axially intermediate sections 15 applied on the toroidal support 11 in the same manner as described for the axially internal sections 13.

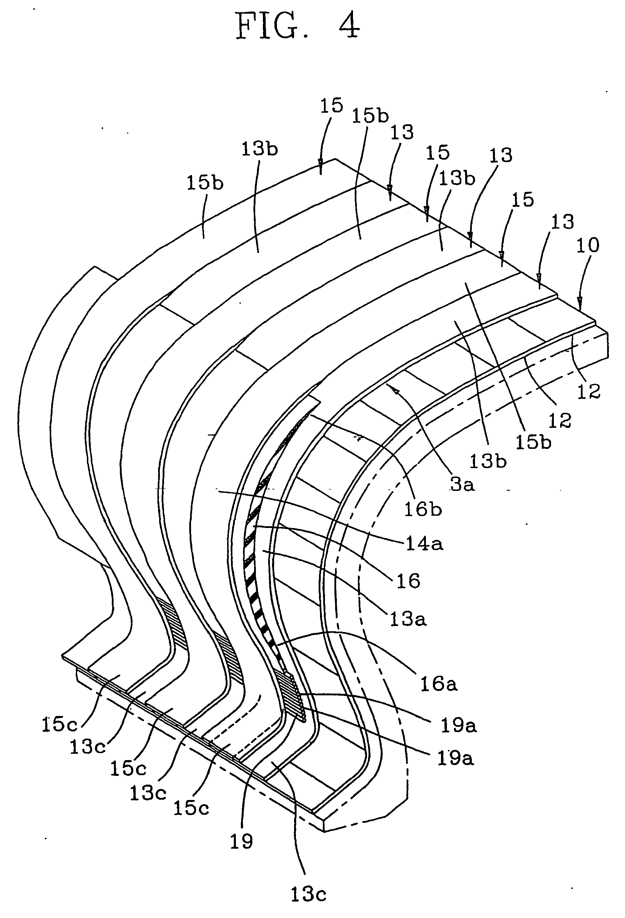

As clearly shown in Fig. 4, each intermediate section 15 is laid down so that its crown portion 15b is circumferentially interposed between the crown portions 13b of the axially internal sections 13, to fill the gap "S" existing therebetween. The side portions 15a of each intermediate section 15 are superposed, in an axially external position, on the elastic-support inserts 16 and the auxiliary stiffening elements 19, and the end portions 15c of the intermediate section itself are brought at least partly into radial superposition on the end portions 13c of the axially internal sections 13.

After carrying out deposition of the axially intermediate strip-like sections 15 as above described, to each of the opposite sides of the carcass structure 2 being made at least one auxiliary elastic-support insert 21 is applied, the cross-section profile of which is substantially in the form of a lunette tapering on opposite sides respectively towards a radially internal apex 21a located close to the respective annular anchoring structure 4 and a radially external apex 21b located in the tyre shoulder region. Each auxiliary insert 21, preferably made of elastomer material of a hardness included between 67 and 91 IRHD can be advantageously directly formed against the side portions 15a of the axially intermediate sections 15, in the same manner as described with reference to manufacture of the elastic-support inserts 16.

Before, after or concurrently with application of the auxiliary elastic-support inserts 21, application of the stiffening elements 17 and the auxiliary anchoring inserts 20 being part of the annular anchoring structures 4 as well, is carried out.

As viewed from the accompanying drawings, each of the stiffening elements 17 is preferably structured in the same manner as described with reference to the auxiliary stiffening elements 19.

In particular, each circumferentially-inextensible stiffening element 17 is formed from a respective strip-like element disposed in concentric coils 17a so as to form a crown disposed coaxial with the carcass.structure 2 and having a cross-section profile radially extending against the end flaps of the first carcass ply 3a, close to the end portions 13c, 15c of the axially internal 13 and intermediate 15 sections.

In the same manner as described with reference to the auxiliary stiffening element 19, a filling body made of elastomer material and tapering away from the tyre rotation axis can be combined with the stiffening element 17 at a radially external position thereof.

Accomplishment and application of the stiffening element 17 can take place following any of the previously described modalities with reference to the auxiliary stiffening element 19.

The auxiliary circumferentially-inextensible annular anchoring insert 20 is made and applied against the end surfaces 13c, 15c of the axially internal and intermediate sections 13 and 15; it too is preferably obtained by winding up of at least one continuous thread-like element in concentric coils 20a disposed axially in side by side relationship around the toroidal support 11 to define a cross-section profile extending in a direction parallel to the respective frusto-conical rest surface 11a. Coils 20a forming the auxiliary annular anchoring insert 20 can be such disposed that one or more stretches thereof are radially superposed, possibly with the aid of rollers or other convenient means acting against the frusto-conical rest surfaces 11a of the toroidal support 11.

The auxiliary annular anchoring insert 20 can be advantageously manufactured in the extension of the stiffening element 17, before or after formation thereof, without creating any interruption in the thread-like element or elements employed in making both these two components.

Then formation of the second carcass ply 3b is started by deposition of the axially external strip-like sections 14.

This deposition step can be carried out in a manner identical or similar to the already described one with reference to deposition of the axially internal 13 and intermediate 15 sections.

In a convenient embodiment, the axially external strip-like sections 14 are laid down in a crossed orientation with respect to the internal and intermediate sections 13 and 15, preferably forming an angle symmetrically opposed to that formed by the latter with reference to the circumferential extension direction of the carcass structure 2.

Deposition of the axially external strip-like sections 14 preferably takes place according to a circumferential pitch substantially corresponding to their width, so as to cause completion of the second carcass ply formation 3b following a single full revolution carried out by the toroidal support 11 around its own rotation axis. When deposition has been completed, each of the auxiliary elastic-support inserts 21 is interposed between the side portions 15a of the axially intermediate sections 15 and the side portions 14a of the axially external sections 14.

In accordance with a preferential embodiment of the invention, after deposition of the axially external strip-like sections 14, formation of the annular anchoring structures 4 at the beads is completed.

To this aim, for each of the annular anchoring structures 4 application of the annular anchoring insert 18 against the respective end portions 14c axially bent outwardly of the axially external strip-like sections 14 is carried out. Accomplishment of the annular anchoring insert 18 too can be obtained in a manner identical or similar to that previously described with reference to the auxiliary annular anchoring insert 20, as well as to the stiffening elements 17, 19, i.e. by winding up at least one continuous strip-like element to form a plurality of coils 18a disposed axially close to each other in one or more superposed layers, to define a cross-section profile extending parallel to the respective frusto-conical rest surface 11a.

Following the above operation, each of the end portions 14a of the axially external sections 14 advantageously is enclosed and firmly retained between the annular anchoring element 28 and auxiliary annular anchoring insert 20.

In tyres of the radial type, usually applied to the carcass structure 2 is a belt structure 5.

Such a belt structure 5 can be made in any manner convenient for a person skilled in the art and, in the embodiment shown, it essentially comprises a first and a second belt strips 6a, 6b having cords with a respectively crossed orientation. Superposed on the belt strips 6a, 6b is an auxiliary belt strip 7, for instance obtained by arranging at least one continuous cord wound up in circumferential coils disposed in axial side by side relationship around the belt strips themselves.

Then a tread band 8 is applied to the belt structure 5, while application of sidewalls 9 to the side portions of the carcass structure 2 is carried out; these sidewalls too can be obtained in any manner convenient for a person skilled in the art.

Exemplary embodiments of a belt structure, sidewalls and a tread band that can be advantageously adopted for full manufacture of tyre 1 on the toroidal support 11 are described in document EP 919 406, in the name of the same Applicant.

Tyre 1 manufactured as above described now lends itself to be submitted, possibly after removal from support 11, to a vulcanization step that can be carried out in any known and conventional manner.

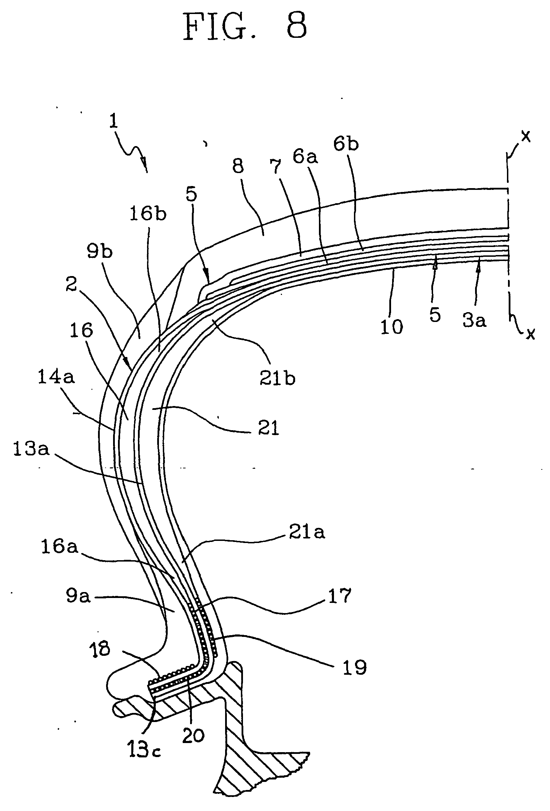

In Figs. 8, 9 and 10 some other embodiments of tyres with a self-supporting carcass structure 2 to be obtained in accordance with the present invention are depicted.

Each of these embodiments substantially differs from the tyre described with reference to Figs. 1 to 7 for the number of components provided in making the carcass structure 2 and the mutual arrangement of said components. Accomplishment of each component substantially takes place in a manner identical or similar to the one described with reference to Figs. 1 to 7.

In particular, the tyre shown in Fig. 8 in its carcass structure 2 has a single carcass ply 3 formed of axially internal 13 and axially external 14 sections, in the absence of the intermediate sections 15 described with reference to Figs. 1 to 7. Both axially internal and axially external sections, 13 and 14, are laid down according to a circumferential distribution pitch corresponding to a multiple of, more specifically twice, their width, where the crown portions 14b of the axially external sections 14 are each interposed between the crown portions 13b and two circumferentially-adjacent axially internal sections 13.

In the same manner as in the tyre manufacture in accordance with Figs. 1 to 7, elastic-support inserts 16 are applied against the side portions 13a of the axially internal sections 13 before carrying out deposition of the axially external sections 14. Consequently, the elastic-support inserts 16 are interposed between the side portions 13a, 14a of the axially internal and axially external sections 13 and 14, once the carcass ply 3 manufacture has been completed.

Before deposition of the axially internal sections 13, auxiliary elastic-support inserts 21 are also provided to be arranged on the toroidal support 11, and for instance they can be directly formed against the opposite side surfaces of the latter or against liner 10 previously formed on said surfaces. Consequently, in the finished carcass structure 2 the auxiliary elastic-support inserts 21 are placed at an axially internal position relative to the side portions 14a of the axially external sections 14.

Unlike the embodiment shown in Figs. 1 to 7, for each of the annular anchoring portions 4 the auxiliary stiffening element 19 is placed at an axially internal position against the side portions 13a of the axially internal sections 13. This auxiliary stiffening element 19 can be directly made on, or applied to, the toroidal support surfaces 11, before deposition of the axially internal sections 13.

The auxiliary annular anchoring insert 20 and stiffening element 17 are, in turn, interposed between the end portions 13c, 14c and side portions 13a, 14a belonging to the axially internal and external sections, 13 and 14, respectively.

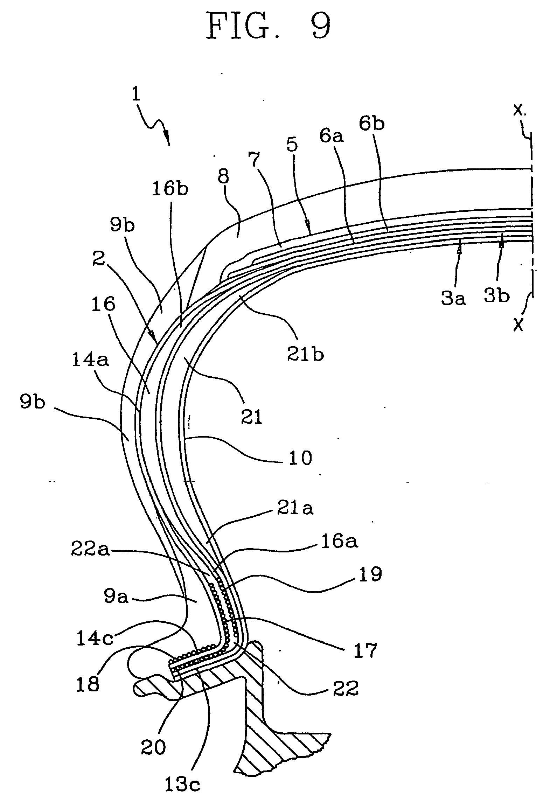

In the embodiment shown in Fig. 9, the carcass structure 2 has a first carcass ply 3a and a second carcass ply 3b, formed from axially internal sections 13 and axially external sections 14 respectively, in the absence of the intermediate sections 15 described with reference to Figs. 1 to 7.

In this case, both axially internal 13 and axially external 14 sections are laid down according to a circumferential distribution pitch substantially corresponding to their width. Before application of the axially internal sections 13, formation of a pair of auxiliary elastic-support inserts 21 is carried out, each of them being disposed against one of the opposite sides of the toroidal support 11. In the carcass structure 2 of the finished tyre, the auxiliary elastic support inserts 21 are therefore located at a position axially internal to the side portions 13a of the axially internal sections 13, in the same manner as described with reference to Fig. 8.

After deposition of the axially internal sections 13 and before deposition of the axially external sections 14, application of the elastic-support inserts 16 is carried out, said supports being interposed, in the finished tyre, between the side portions 13a, 14a of the inner 13 and outer 14 sections respectively.

Each annular anchoring structure 4 is made in the same manner as described with reference to the embodiment in Fig. 8, but, unlike the provision of the last mentioned embodiment, the auxiliary stiffening element 19 is made after application of the axially internal sections 13, at an axially external position against the side portions 13a of the latter, so as to match with the radially internal apex 16a of the respective elastic-support insert 16, in the same manner as described in Figs. 1 to 7.

It is also preferably provided that a filling body 22 should be axially interposed between the stiffening element 17 and auxiliary stiffening element 19, as clearly viewed from Fig. 9. This filling body 22 can also have a prolongation thereof 22a radially extending outwardly of the stiffening element 17, to join the elastic-support insert 16 and be connected with the axially external side surface of the latter.

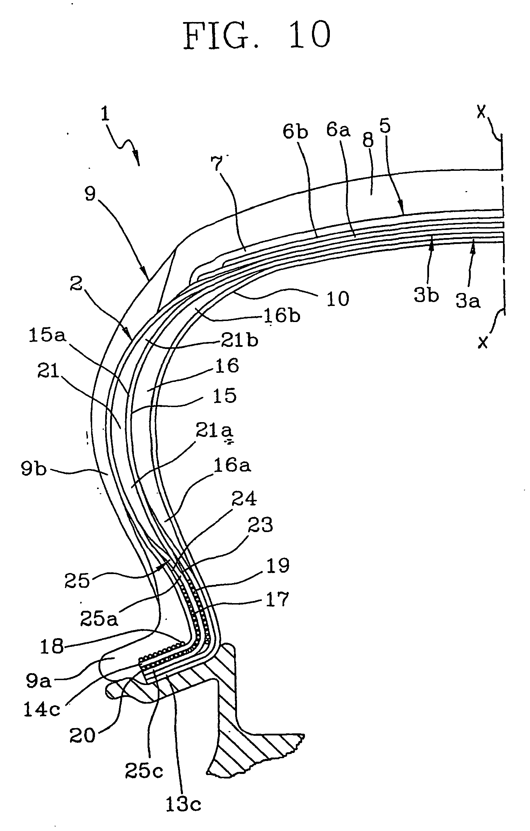

In the embodiment shown in Fig. 10 the carcass structure 2 has a first and a second carcass plies 3a, 3b. The first carcass ply 3a is formed from axially internal sections 13 and first axially intermediate sections 15, laid down according to a circumferential pitch that is substantially twice their width, and sequentially alternated with each other, in the same manner as described with reference to manufacture of the first carcass ply 3a in the embodiment referred to in Figs. 1 to 7.

Each elastic-support insert 16 is axially interposed between the side portions 13a, 15a belonging to the axially internal sections and the first axially intermediate sections, respectively. The second carcass ply 3b is in turn formed of axially intermediate sections 25 laid down on the first carcass ply 3a according to a circumferential distribution pitch substantially corresponding to twice their width, and of axially external sections 14 each alternated with, and interposed between, two of the second axially intermediate sections 25. The second intermediate sections 25 and the outer sections 14 forming the second carcass ply 3b can be laid down, if required, following a crossed orientation with respect to the first intermediate sections 15 and the inner sections 13 forming the first carcass ply 3a. Additionally or alternatively, the sections belonging to the first and second carcass plies 3a, 3b respectively are provided to be applied in deposition planes parallelly offset on respectively opposite sides from a meridian plane of the toroidal support 11, to give a crossed orientation to the side portions of said sections, while at the same time keeping the crown portions orientated in planes substantially radial to said geometric axis.

Interposed between the side portions 14a, 25a belonging to the outer sections 14 and second intermediate sections 25 respectively, at each of the tyre sidewalls 9, is at least one auxiliary elastic-support insert 21.

In each annular reinforcing structure 4, the end portions 14c of the axially internal sections 14 are applied at a radially external position to the auxiliary annular anchoring insert 20, in turn applied at a radially external position against the end portions 15c, 25c belonging to the first and second intermediate sections 15, 25 respectively, which mutually join close to the end flaps of the carcass plies 3a, 3b.

The stiffening element 17 is in turn axially interposed between the side portions 14a of the axially internal sections 14 and the side portions 15a, 25a of the first and second intermediate sections 15, 25. The auxiliary stiffening element 19 is axially interposed between the side portions 15a, 25a of the first and second intermediate sections 15, 25 and the side portions 13a belonging to the axially internal sections 13.

A first and a second fillers 23, 24 can be arranged respectively at a radially external position in the extension of the stiffening element 17 and the auxiliary stiffening element 19..

Irrespective of which embodiment is manufactured in accordance with the present invention, use of the elastic-support inserts 16, 21 incorporated into the carcass structure 2 at the sidewalls 9 enables tyres having beads of the "reverse flange" type to receive the desired self-support qualities, overcoming all problems and drawbacks found by the Applicant with reference to use of annular elements fitted on the rim, proposed by the known art. In particular, the absence of the annular element fitted on the rim as provided in documents US 5,674,993 and US 5,971,047, enables elimination of the risk that the tyre belt structure 5 may be brought directly into contact with rigid portions of the wheel as a result of shocks or impacts transmitted from the road surface to the ground-contacting region. Also greatly increased is the inner volume of the tyre to be filled with air or another inflating fluid, which is a further advantage for ride comfort, above all with reference to low-section tyres that, due to their nature, offer relatively limited inner volumes, the further reduction of which would therefore result in too high a penalty.

In addition, the present invention makes it surprisingly possible to obtain a tyre with beads adapted for reverse flanges and elastic-support inserts incorporated into the carcass structure 2 by a greatly simplified manufacturing process, from the point of view of the operating flexibility too, as compared with the solutions found in the known art.

It is also to be noted in this connection that, by conveniently selecting the deposition modalities for the inner 13, outer 14 and intermediate 15 and 25 strip-like sections the construction scheme and the consequent functional behaviour of the carcass structure 2 can be modified at will, thereby also obtaining carcass structures that are different from the above described embodiments.

In particular, it is for instance possible to lay down the inner sections 13 according to a circumferential distribution pitch substantially corresponding to their width, to obtain the first carcass ply 3a following a single full revolution of the toroidal support 11, and make a second carcass ply 3b using outer sections 14 laid down in an alternated sequence with the intermediate sections 15, after interposition of the elastic-support inserts 16.

In addition, in the carcass structure 2, the inner 13, intermediate 15 and/or 25 and outer 14 sections may be provided to cooperate in forming a single carcass ply. In this case, the sections belonging to each of the inner 13, intermediate 15 and/or 25 and outer series are laid down according to a circumferential distribution pitch which is a multiple of their width. In particular, the numerical factor that multiplied by the width of each section gives the measure of the circumferential distribution pitch will be equal to the number of the series of sections provided in forming the individual ply or each of the plies. For instance, if three series of sections, an inner 13, intermediate 15 and outer 14 series respectively, are provided, the circumferential distribution pitch of the sections of each series will correspond to three times their width.

In more detail, for the purpose of forming the carcass ply it is first provided that the axially internal sections 13 should be laid down according to a circumferential distribution pitch corresponding to a multiple of their width. After application of the elastic-support inserts 16 and possibly the auxiliary stiffening elements 19, the axially intermediate sections 15 are applied according to a circumferential distribution pitch corresponding to a multiple of their width, each with the respective crown portion 15b disposed circumferentially close to the crown portion 13b of one of the axially internal sections 13. Then, after application of the stiffening elements 17 and the possible auxiliary annular anchoring inserts 20, application of the axially external sections 14 is carried out, these sections too being laid down according to a circumferential pitch substantially corresponding to a multiple of their width. When deposition has been completed, each axially external section 14 has its crown portion 14b disposed in circumferential side by side relationship between the crown portion 13b of one of the axially internal sections 13 and the crown portion 15b of one of the axially intermediate sections 15, so as to define the carcass ply therewith. By so doing, the crown portions 13b, 15b and 14b of the individual sections, in the carcass ply thus made, are sequentially alternated in mutual side by side relationship along one and the same circumferential line, whereas the respective side portions 13a, 15a, 14a are axially offset from each other to house one or more elastic-support inserts 16, 21 in the gaps present between the side portions of the inner 13 and intermediate 15 sections, as well as between the side portions of the intermediate 15 and outer 14 sections.

In conclusion, by suitably selecting the deposition scheme of the strip-like sections, it is possible to control, depending on requirements, the containment effect exercised by the carcass ply or plies 3a, 3b around the elastic-support inserts 16, 21.

If necessary, in fact, the carcass plies 3a, 3b can be made and arranged so as to form a sort of container completely closed around at least one of the elastic support inserts 16, 21, for instance by respectively making the plies themselves with the axially internal 13 and axially external 14 sections laid down according to a pitch equal to their width and causing the end portions 13c, 14c of the sections to mutually match within the annular anchoring structures 4. Under this circumstance, the elastomer material of the support insert enclosed between plies 3a, 3b behaves like a sort of hydrostatic liquid, i.e. it is incompressible and its deformability is tightly related to the deformability of the container holding it.

If, on the contrary, at least one of the carcass plies 3a, 3b is made with two series of sections, the inner sections 13 and outer sections 14 for example, laid down in an alternated sequence and in subsequent steps after interposition of at least one elastic-support insert 16, it is originally possible to create a sort of container around the insert itself, which is partly open on its axially opposite sides. In this case, in fact, the support insert 16 will have the possibility of expanding in the gaps existing, on each of its axially opposite sides, between the side portions of the inner 13 and outer 14 sections laid down according to a pitch which is twice their width. Thus, the stiffening degree imparted as a whole to the carcass structure 2 is reduced, the modulus of elasticity of the elastomer material employed in making the support inserts 16 being the same. The amount of this reduction in the stiffening degree can be advantageously modulated depending on requirements, by modifying the land/empty space ratio determined by the side portions of the strip-like sections on the axially opposite sides of the support insert 16 and/or 21, just as an indication between a maximum value and a minimum value, the former being obtained by manufacturing, as above said, two carcass plies 3a, 3b each formed of a single series of strip-like sections 13, 14 laid down according to a pitch equal to their width, and the latter being obtained by using, as in the example in Fig. 8, a single carcass ply 3a formed of two series of sections 13, 14 laid down in an alternated sequence.

It is also possible to modulate the degree of containment for the deformations of the elastic-support inserts 16, 21 by modifying, depending on requirements, the construction scheme of the annular anchoring structures 4, so as to modify the axial distance between the end portions 13c, 14c, 15c of the strip-like sections, in order to provide an additional possibility of expansion to the support inserts 16, 21 being deformed, in the direction of the tyre bead.

In conclusion, the invention, as compared with the known art, enables new variables to be introduced that have an influence on the tyre behaviour, particularly in connection with its stiffness both under inflated and under deflated conditions.

In particular, it becomes advantageously possible to conveniently modulate the containment degree obtained by the carcass ply or plies 3a, 3b around the elastic-support inserts 16, 21, so as to give the tyre 1 the desired self-support qualities without increasing the torsional stiffness of same too much, which is particularly important in terms of ride comfort, above all in connection with the effects produced by longitudinal impact forces that are transmitted to the wheel when the tyre encounters obstacles or unevennesses on the road surface.

The invention also enables manufacture of a self-supporting tyre the inventive carcass structure of which lends itself to be obtained directly on a toroidal support on which the whole tyre can be advantageously formed. In this way, all problems connected with manufacture, storage and management of semifinished products, which are common to the manufacturing processes of a traditional conception, are eliminated.

## Claims

1. A self-supporting tyre for vehicle wheels, comprising:
- a carcass structure (2) having at least one carcass ply (3a, 3b) provided with end flaps in engagement with respective annular reinforcing structures (4) disposed in coaxial relationship with a rotation axis of the tyre at positions axially spaced apart from each other and each incorporated into a tyre bead, at least one of said beads exhibiting, at a radially internal position thereof, a rest surface (4a) that, in a diametrical section plane of the tyre, defines a profile converging towards the rotation axis of the tyre itself away from an equatorial plane (X-X) of the same;
- a belt structure (5) applied to the carcass structure (2) at a radially external position thereof;
- a tread band (8) applied to the belt structure (2) at a radially external position thereof;
- at least one pair of sidewalls (9) each extending between one of said beads and a side edge of the tread band (8), at a position axially external to the carcass structure (2);
- at least one pair of elastic-support inserts (16, 21) incorporated into the carcass structure (2), each at one of said sidewalls (9);
wherein the elastic-support inserts (16, 21) have respective radially internal apices (16a, 21a) placed close to the beads, and radially external apices (16b, 21b) placed close to the side edges of the tread band (8); and
wherein said at least one carcass ply (3a, 3b) comprises:
- axially internal strip-like sections (13) and axially external strip-like sections (14), said axially internal (13) and axially external (14) sections being circumferentially distributed around said rotation axis and each extending in a "U"-shaped configuration around the cross-section profile of the carcass structure (2), to define two side portions (13a, 14a) mutually spaced apart in an axial direction and a crown portion (13b, 14b) extending at a radially external position between the side portions (13a, 14a),
- said elastic-support inserts (16) being each axially interposed between side portions (13a) of the axially internal sections (13) and side portions (14a) of the axially external sections (14)

2. A tyre as claimed in claim 1, further comprising:
- axially intermediate strip-like sections (15) circumferentially distributed around said rotation axis and each extending in a "U"-shaped configuration around the cross-section profile of the carcass structure (2) to define two side portions (15a) overlapping, at an axially external position, said elastic-support inserts (16), and a crown portion (15b) extending in a radially external position between the side portions (15a);
- a pair of auxiliary elastic-support inserts (20) each axially interposed between the side portions (15a) of the axially intermediate sections (15) and the side portions (14a) of the axially external sections (4).

3. A tyre as claimed in claim 2, wherein
- the axially internal sections (13) are distributed according to a circumferential pitch corresponding to a multiple of their width,
- the axially intermediate sections (15) are distributed according to a circumferential pitch corresponding to a multiple of their width and each have the respective crown portion (15b) interposed in circumferential approaching relationship between the crown portion (13b) of two axially internal sections (13), to define a first carcass ply (3a) therewith,
- and the axially external sections (14) are distributed according to a circumferential pitch substantially corresponding to their width, to define a second carcass ply (3b) radially superposed on the first carcass ply (3a) close to said crown portions (13b, 14b).

4. A tyre as claimed in claim 2, further comprising second axially intermediate strip-like sections (25) circumferentially distributed around said rotation axis and each extending in a "U"-shaped configuration around the cross-section profile of the carcass structure (2) to define two side portions (25a) partly overlapping, at an axially external position, the side portions (15a) of the first axially intermediate sections (15), and a crown portion (25b) extending in a radially external position between the respective side portions (25a).

5. A tyre as claimed in claim 4, wherein
- the axially internal sections (13) are distributed according to a circumferential pitch substantially corresponding to a multiple of their width,
- the first axially intermediate sections (15) are distributed according to a circumferential pitch substantially corresponding to a multiple of their width, each with the respective crown portion (15b) interposed in circumferential approaching relationship between the crown portions (13b) of two axially internal sections (13), to define a first carcass ply (3a) therewith,
- the second axially intermediate sections (25) are distributed according to a circumferential pitch substantially corresponding to a multiple of their width,
- and the axially external sections (14) are distributed according to a circumferential pitch substantially corresponding to a multiple of their width, each with the respective crown ---portion (14b) interposed in circumferential approaching relationship between the crown portions (25b) of two of said second axially intermediate sections (25), to define a second carcass ply (3b) therewith, which second carcass ply is radially superposed on the first carcass ply (3a) close to said crown portions (13b, 14b, 15b, 25b).

6. A tyre as claimed in claim 2, wherein
- the axially internal sections (13) are distributed according to a circumferential pitch substantially corresponding to their width, to define a first carcass ply (3a),
- the axially intermediate sections (15) are distributed according to a circumferential pitch corresponding to a multiple of their width,
- and the axially external sections (14) are distributed according to a circumferential pitch corresponding to a multiple of their width and each have the respective crown portion (14b) interposed in a circumferential approaching relationship between the crown-portions (15b) of two axially intermediate sections (15), to define a second carcass ply (3b) therewith, which second carcass ply is radially superposed on the first carcass ply (3a) close to said crown portions (13b, 14b, 15b).

7. A tyre as claimed in claim 2, wherein the axially internal (13), intermediate (15) and external (14) sections respectively, are distributed according to a circumferential distribution pitch which is a multiple of their width, in accordance with a numerical factor corresponding to the number of series of inner (13), intermediate (15) and outer (14) sections provided in forming said at least one carcass ply.

8. A tyre as claimed in claim 7, wherein the crown portions (13b, 15b, 14b) of the individual inner (13), intermediate (15) and outer (14) sections are sequentially interposed in a mutual approaching relationship along one and the same circumferential line, whereas the respective side portions (13a, 15a, 14a) are axially offset from each other to house at least one of said elastic-support inserts (16, 21) in the empty spaces or gaps existing between the side portions of the inner (13) and intermediate (15) sections and between the side portions of the intermediate (15) and outer (14) sections.

9. A tyre as claimed in claim 2, wherein
- the axially internal sections (13) are distributed according to a circumferential pitch substantially corresponding to a multiple of their width,
- the axially intermediate sections (15) are distributed according to a circumferential pitch substantially corresponding to a multiple of their width and each have the respective crown portion (15b) disposed circumferentially close to the crown portion (13b) of an axially internal section (13),
- and the axially external sections (14) are distributed according to a circumferential pitch substantially corresponding to a multiple of their width, each with its crown portion (14b) in circumferential approaching relationship between the crown portion (13b) of one of the axially internal sections (13) and the crown portion (15b) of one of the axially intermediate sections (15), to define said at least one carcass ply therewith.

10. A tyre as claimed in claim 1, wherein the axially internal sections (13) are distributed according to a circumferential pitch substantially corresponding to a multiple of their width, the axially external sections (14) each having the respective crown portion (14b) interposed in circumferential approaching relationship between the crown portions (13b) of two axially internal sections (13).

11. A tyre as claimed in claim 1, wherein the axially internal sections (13) and axially external sections (14) are distributed according to a circumferential pitch corresponding to the width of each section, to define a first carcass ply (3a) and a second carcass ply (3b) respectively, the second carcass ply (3b) being radially superposed on the first carcass ply (3a) close to said crown portions (13b, 14b).

12. A tyre as claimed in claim 1, further comprising a pair of auxiliary elastic-support inserts (20) each disposed at an axially internal position with respect to the axially internal sections (13).

13. A tyre as claimed in claim 1, wherein each of said strip-like sections (13, 14) substantially extends in a plane parallelly offset from a meridian plane of the tyre, so that the respective crown portion (13b, 14b), with respect to a radial reference plane passing through the transition point between the crown portion (13b, 14b) itself and at least one of the corresponding side portions (13a, 14a), is such oriented that it forms an angle of a value different from the inclination of the side portions (13a, 14a).

14. A tyre as claimed in claim 13, wherein the axially internal sections (13) and axially external sections (14) lie in deposition planes that at respectively opposite sides are offset from said meridian plane, so that at least the side portions (13a, 14a) of the axially internal sections (13) have a crossed orientation relative to the side portions (13a, 14a) of the axially external sections (14).

15. A tyre as claimed in claim 1, wherein at least one of said annular reinforcing structures (4) comprises:
- at least one stiffening element (17) applied against said at least one carcass ply (3a, 3b) and having a cross-section profile extending away from the rotation axis of the tyre;
- at least one annular circumferentially-inextensible anchoring insert (18) having a cross-section profile of flattened conformation, extending axially away from the stiffening element (17) in a direction converging towards the geometric rotation axis of the tyre, away from the equatorial plane (X-X) thereof.

16. A tyre as claimed in claim 15, wherein the cross-section profile of the annular reinforcing structure (4) has a geometric centre of gravity (G) located at such a position that an axially external end edge (16) of said annular anchoring insert (19) is pushed towards the rotation axis of the tyre following a tension generated along said at least one carcass ply (3a, 3b) by effect of the inflation pressure of the tyre.

17. A tyre as claimed in claim 15, wherein the cross-section profile of the annular reinforcing structure (4) has a geometric centre of gravity (G) located at an axially external position with respect to said stiffening element (17) and at an axially internal position with respect to an axially external end edge of said annular anchoring insert (18).

18. A tyre as claimed in claim 15, wherein said stiffening element (17) is axially positioned between a respective axially internal end flap (13b) and a respective axially external end flap (14b) of said at least one carcass ply (3a, 3b).

19. A tyre as claimed in claim 15, wherein said annular anchoring insert (18) is applied against an end portion (14c) of an outer end flap of the carcass ply, said end portion extending axially away from the equatorial plane (X-X) of the tyre.

20. A tyre as claimed in claim 19, wherein said annular anchoring insert (18) is applied at a radially external position with respect to said end portion (14c) of the outer end flap.

21. A tyre as claimed in claim 15, wherein said annular anchoring insert (18) is disposed substantially close to a radially internal edge of the stiffening element (17).

22. A tyre as claimed in claim 18, further comprising at least one auxiliary annular anchoring insert (20) parallel to and radially close to said annular anchoring insert (18).

23. A tyre as claimed in claim 22, wherein said auxiliary anchoring insert (20) is applied at a radially external position with respect to an end portion (13c) of said inner end flap, extending axially away from an equatorial plane (X-X) of the tyre.

24. A tyre as claimed in claim 23, wherein said auxiliary anchoring insert (20) is applied at a radially internal position relative to said end portion (14c) of the outer end flap.

25. A tyre as claimed in claim 15, further comprising at least one auxiliary circumferentially-inextensible stiffening element (19) having a cross-section profile radially extending at an axially internal position relative to said stiffening element (17).

26. A tyred wheel for vehicles comprising a mounting rim (1a) to be associated with a hub of a vehicle and a tyre (1) mounted on said rim (1a), said tyre (1) comprising the features defined in one or more of the preceding claims.

27. A method of manufacturing a self-supporting tyre for vehicle wheels, comprising the steps of:
- preparing a carcass structure (2) having at least one carcass ply (3a, 3b) provided with end flaps in engagement with respective annular reinforcing structures (4) disposed in coaxial relationship with a rotation axis of the tyre at positions axially spaced apart from each other and each incorporated into a tyre bead, at least one of said beads exhibiting, at a radially internal position thereof, a rest surface (4a) that, in a diametrical section plane of the tyre, defines a profile converging towards the rotation axis of the tyre itself away from an equatorial plane (X-X) of the same;
- applying a belt structure (5) to the carcass structure (2) at a radially external position thereof;
- applying a tread band (8) to the belt structure (5) at a radially external position thereof;
- applying a pair of sidewalls (9) to the carcass structure (2), at laterally opposite positions of the latter, each of said sidewalls (9) extending between one of said beads and a side edge of the tread band,
wherein preparation of the carcass structure (2) comprises the following steps:
- arranging strip-like sections (13, 14), each comprising longitudinal and parallel thread-like elements;
- laying down axially internal strip-like sections (13) circumferentially distributed on the toroidal support (11), each of said axially internal sections (13) extending in a "U"-shaped configuration around the cross-section profile of the toroidal support (11), to define two side portions (13a) that are mutually spaced apart in an axial direction, and a crown portion (13b) extending in a radially external position between the side portions (13a);
- applying said elastic-support inserts (16), at an axially external position, to the side portions (13a) of the axially internal sections (13), each at one of said sidewalls, said elastic support inserts (16,21) having respective radially internal apices (16a, 21a) placed close to the beads, and radially external apices (16b, 21b) placed close to the side edges of the tread band (8);
- laying down axially external strip-like sections (14) circumferentially distributed on the toroidal support (11), each of said axially external sections (14) extending in a "U"-shaped configuration around the cross-section profile of the toroidal support (11), to define two side portions (14a) mutually spaced apart in an axial direction, each extending in an axially external position relative to one of the elastic-support inserts (16), and a crown portion (14b) extending in a radially external position between the side portions (14a).

28. A method as claimed in claim 27, wherein before deposition of the axially external sections (14) the following further steps are carried out:
- laying down axially intermediate strip-like sections (15) circumferentially distributed around said rotation axis and each extending in a "U"-shaped configuration around the cross-section profile of the carcass structure (2) to define two side portions (15a) overlapping, in an axially external position, said elastic-support inserts (16), and a crown portion (15b) extending in a radially external position between the side portions (15a);
- applying a pair of auxiliary elastic-support inserts (20), at an axially external position, to the side portions (15a) of the axially intermediate sections (15), before deposition of the axially external sections (14).

29. A method as claimed in claim 28, wherein
- the axially internal sections (13) are laid down according to a circumferential distribution pitch substantially corresponding to a multiple of their width,
- the axially intermediate sections (15) are laid down according to a circumferential distribution pitch substantially corresponding to a multiple of their width, each with the respective crown portion (15b) interposed in a circumferential approaching relationship between the crown portions (13b) of two axially internal sections (13), to define a first carcass ply (3a) therewith,
- and the axially external sections (14) are laid down according to a circumferential distribution pitch substantially corresponding to their width, to define a second carcass ply (3b) therewith, which carcass ply is radially superposed on the first carcass ply (3a).

30. A method as claimed in claim 28, wherein before application of said auxiliary elastic-support insert (20), also carried out is the step of:
- laying down second axially-intermediate strip-like sections (25) circumferentially distributed around said rotation axis and each extending in a "U"-shaped configuration around the cross-section profile of the toroidal support (11), to define two side portions (25a) partly overlapping, at an axially external position, the side portions (15a) of the first axially intermediate sections (15) previously laid down, and a crown portion (25b) extending in a radially external position between the respective side portions (25a).

31. A method as claimed in claim 30, wherein
- the axially internal sections (13) are laid down according to a circumferential distribution pitch substantially corresponding to a multiple of their width,
- the first axially intermediate sections (15) are laid down according to a circumferential distribution pitch substantially corresponding to a multiple of their width, each having the respective crown portion (15b) interposed in a circumferential approaching relationship between the crown portions (13b) of two axially internal sections (13), to define a first carcass ply (3a) therewith,
- the second axially intermediate sections (25)-are laid down according to a circumferential distribution pitch substantially corresponding to a multiple of their width,
- and the axially external sections (14) are laid down according to a circumferential distribution pitch substantially corresponding to a multiple of their width, each having the respective crown portion (14b) interposed in a circumferential approaching relationship between the crown portions (25b) of two of said second axially intermediate sections (25), to define a second carcass ply (3b) therewith.

32. A method as claimed in claim 28, wherein
- the axially internal sections (13) are laid down according to- a circumferential distribution pitch substantially corresponding to their width, to define a first carcass ply (3a),
- the axially intermediate sections (15) are laid down according to a circumferential distribution pitch substantially corresponding to a multiple of their width,
- and the axially external sections (14) are laid down according to a circumferential distribution pitch substantially corresponding to a multiple of their width, each having the respective crown portion (14b) interposed in a circumferential approaching relationship between the crown portions (15b) of two of said intermediate sections (15), to define a second carcass ply (3b) therewith, which carcass ply is radially superposed on the first carcass ply (3a) close to said crown portions (13b, 14b, 15b).

33. A method as claimed in claim 28, wherein
- the axially internal sections (13) are laid down according to a circumferential distribution pitch substantially corresponding to a multiple of their width,
- the axially intermediate sections (15) are laid down according to a circumferential distribution pitch substantially corresponding to a multiple of their width, each having the respective crown portion (15b) disposed circumferentially close to the crown portion (13b) of an axially internal section (13),
- and the axially external sections (14) are laid down according to a circumferential pitch substantially corresponding to a multiple of their width, each having its crown portion (14b) in circumferential approaching relationship between the crown portion (13b) of one of the axially internal sections (13) and the crown portion (15b) of one of the axially intermediate sections (15), to define said at least one carcass ply therewith.

34. A method as claimed in claim 27, wherein the axially internal sections (13) are distributed according to a circumferential pitch substantially corresponding to a multiple of their width, the axially external sections (14) being each laid down with their crown portion (14b) in circumferential approaching relationship between the crown portions (13b) of two axially internal sections (13).

35. A method as claimed in claim 27, wherein the axially internal sections (13) are distributed according to a circumferential pitch substantially corresponding to their width to define a first carcass ply (3a), and the axially external sections (14) are distributed according to a circumferential pitch substantially corresponding to their width to define a second carcass ply (3b) radially superposed on the first carcass ply (3a) close to said crown portions (13b, 14b).

36. A method as claimed in claim 27, further comprising the step of arranging a pair of auxiliary elastic-support inserts (20), each at an axially internal position with respect to the axially internal sections (13).

37. A method as claimed in claim 27, wherein each of said strip-like sections (13, 14) is laid down in a plane parallelly offset from a meridian plane of the toroidal support (11).

38. A method as claimed in claim 37, wherein the axially internal sections (13) and axially external sections (14) are respectively laid down in deposition planes that are offset at respectively opposite sides from said meridian plane, so that the side portions (13a, 14a) of the axially internal (13) and axially external (14) sections have respectively inclined orientations.

39. A method as claimed in claim 27, wherein accomplishment of at least one of said annular anchoring structures (4) comprises the steps of:
- applying at least one annular circumferentially-inextensible anchoring insert (18) in radial superposed relationship with an end portion (14c) of at least one of said end flaps, said anchoring insert (18) having a cross-section profile of flattened conformation extending axially away from the corresponding inner end flap and from an equatorial plane (X-X) of the tyre;
- applying at least one stiffening element (17) against said at least one end flap, said stiffening element (17) being substantially placed at an axially internal position relative to said annular anchoring insert (18) and having a cross-section profile extending away from said rotation axis.

40. A method as claimed in claim 39, wherein application of said annular anchoring insert (18) takes place by winding up of at least one thread-like element in concentric coils (18a) disposed axially close to each other around the toroidal support (11).

41. A method as claimed in claim 39, wherein application of said annular anchoring insert (18) is carried out subsequently to deposition of the axially external sections (14).

42. A method as claimed in claim 39, wherein application of the stiffening element (17) is carried out before application of the annular anchoring insert (18).

43. A method as claimed in claim 39, wherein application of said at least one stiffening element (17) is carried out before deposition of the axially external sections (14).

44. A method as claimed in claim 39, wherein application of said at least one stiffening element (17) is carried out by winding up of at least one thread-like element in concentric coils (17a) that are radially superposed around the toroidal support (11).

45. A method as claimed in claim 39, further comprising the step of applying an auxiliary circumferentially-inextensible annular anchoring insert (20), disposed substantially parallel and radially close to said annular anchoring insert (18).

46. A method as claimed in claim 45, wherein said auxiliary anchoring insert (20) is applied subsequently to deposition of the radially internal sections (13) and before deposition of the radially external sections (14).

47. A method as claimed in claim 45, wherein application of said auxiliary anchoring insert (20) takes place by winding up of at least one thread-like element in concentric coils (20a) disposed axially close to each other around the toroidal support (11).

48. A method as claimed in claim 39, wherein before applying said stiffening element (17), application of at least one auxiliary stiffening element (19) radially extending in an axially internal position relative to the stiffening element itself, is carried out.

49. A method as claimed in claim 48, wherein application of said auxiliary stiffening element (19) preferably takes place by winding up of at least one thread-like element in concentric coils (19a) disposed radially close to each other around the toroidal support (11).

50. A method as claimed in claim 27, wherein each of said elastic-support inserts (16, 21) is formed by winding up of at least one continuous strip-like element of elastomer material so as to form coils that are disposed axially close to and/or radially superposed on, each other around the geometric axis of the toroidal support (11).

## Patentansprüche

1. Selbstabstützender Reifen für Fahrzeugräder
- mit einem Karkassenaufbau (2), der wenigstens eine Karkassenlage (3a, 3b) hat, die mit Endlaschen versehen sind, welche in Eingriff mit jeweiligen ringförmigen Verstärkungsaufbauten (4) stehen, welche in einer koaxialen Beziehung zu einer Drehachse des Reifens an Positionen angeordnet sind, die axial voneinander beabstandet sind und von denen jeder in einen Reifenwulst eingeschlossen ist, wobei wenigstens einer der Wulste an einer radial inneren Position eine Auflagefläche (4a) hat, welche in einer diametralen Schnittebene des Reifens ein Profil bildet, das zu der Drehachse des Reifens hin und weg von dessen Äquatorialebene (X-X) konvergiert,
- mit einem Gurtaufbau (5), der auf den Karkassenaufbau (2) an einer radial äußeren Position von ihm aufgebracht ist,
- mit einem Laufflächenband (8), das auf den Gurtaufbau (2) an einer radial äußeren Position von ihm aufgebracht ist, und
- mit wenigstens einem Paar von Seitenwänden (9), von denen sich jede zwischen einem der Wulste und einem Seitenrand des Laufflächenbandes (8) an einer Position axial außerhalb des Karkassenaufbaus (2) erstreckt,
- mit wenigstens einem Paar von Elastik-Stützeinlagen (16, 21), von denen jede an einer der Seitenwände (9) in den Karkassenaufbau (2) eingeschlossen ist,
- wobei die Elastik-Stützeinlagen (16, 21) jeweils radial innere Spitzen (16a, 21a) nahe an den Wulsten und radial äußere Spitzen (16b, 21b) nahe an den Seitenrändern des Laufflächenbandes (8) haben,
- wobei die wenigstens eine Karkassenlage (3a, 3b) axial innere streifenförmige Abschnitte (13) und axial äußere streifenförmige Abschnitte (14) aufweist, die axial inneren Abschnitte (13) und die axial äußeren Abschnitte (14) am Umfang um die Drehachse verteilt sind und sich jeder in einer U-Form um das Querschnittsprofil des Karkassenaufbaus (2) erstreckt, um zwei Seitenabschnitte (13a, 14a) mit einem gegenseitigen Abstand in Axialrichtung und einen Kronenabschnitt (13b, 14b) zu bilden, der sich an einer radial äußeren Position zwischen den Seitenabschnitten (13a, 14a) erstreckt, und
- wobei jede der Elastik-Stützeinlagen (16) axial zwischen den Seitenabschnitten (13a) der axial inneren Abschnitte (13) und den Seitenabschnitten (14a) der axial äußeren Abschnitte (14) angeordnet ist.

2. Reifen nach Anspruch 1, welcher weiterhin
- axial dazwischenliegende streifenförmige Abschnitte (15), die am Umfang um die Drehachse herum verteilt sind und von denen sich jeder in einer U-Form um das Querschnittsprofil des Karkassenaufbaus (2) erstreckt, um zwei Seitenabschnitte (15a), die an einer axial äußeren Position die Elastik-Stützeinlagen (16) überlappen, und einen Kronenabschnitt (15b) zu bilden, der sich in einer radial äußeren Position zwischen den Seitenabschnitten (15a) erstreckt, und
- ein Paar von zusätzlichen Elastik-Stützeinlagen (20) aufweist, von denen jede axial zwischen den Seitenabschnitten (15a) der axial dazwischenliegenden Abschnitte (15) und den Seitenabschnitten (14a) der axial äußeren Abschnitte (4) angeordnet ist.

3. Reifen nach Anspruch 2, bei welchem
- die axial inneren Abschnitte (13) mit einer Umfangsteilung verteilt sind, die einem Mehrfachen ihrer Breite entspricht,
- die axial dazwischenliegenden Abschnitte (15) mit einer Umfangsteilung verteilt sind, die einem Mehrfachen ihrer Breite entspricht und der jeweilige Kronenabschnitt (15b) eines jeden in einer sich dem Umfang annähernden Beziehung zwischen den Kronenabschnitten (13b) von zwei axial inneren Abschnitten (13) zur Bildung einer ersten Karkassenlage (3a) damit angeordnet ist und
- die axial äußeren Abschnitte (14) mit einer Umfangsteilung verteilt sind, die im Wesentlichen ihrer Breite entspricht, um eine zweite Karkassenlage (3b) zu bilden, die radial auf die erste Karkassenlage (3a) nahe an den Kronenabschnitten (13b, 14b) aufgelegt ist.

4. Reifen nach Anspruch 2, welcher weiterhin zweite axial dazwischenliegende streifenförmige Abschnitte (25) aufweist, die am Umfang um die Drehachse herum verteilt sind und von denen sich jeder in einer U-Form um das Querschnittsprofil des Karkassenaufbaus (2) erstreckt, um zwei Seitenabschnitte (25a), die in einer axial äußeren Position die Seitenabschnitte (15a) der ersten axial dazwischenliegenden Abschnitte (15) teilweise überlappen, und einen Kronenabschnitt (25b) zu bilden, der sich in einer radial äußeren Position zwischen den jeweiligen Seitenabschnitten (25a) erstreckt.

5. Reifen nach Anspruch 4, bei welchem
- die axial inneren Abschnitte (13) mit einer Umfangsteilung verteilt sind, die im Wesentlichen einem Mehrfachen ihrer Breite entspricht,
- die ersten axial dazwischenliegenden Abschnitte (15) mit einer Umfangsteilung verteilt sind, die im Wesentlichen einem Mehrfachen ihrer Breite entspricht, und der jeweilige Kronenabschnitt (15b) eines jeden in einer sich dem Umfang annähernden Beziehung zwischen den Kronenabschnitten (13b) von zwei axial inneren Abschnitten (13) zur Bildung einer ersten Karkassenlage (3a) damit angeordnet ist,
- die zweiten axial dazwischenliegenden Abschnitte (25) mit einer Umfangsteilung verteilt sind, die im Wesentlichen einem Mehrfachen ihrer Breite entspricht, und
- die axial äußeren Abschnitte (14) mit einer Umfangsteilung verteilt sind, die im Wesentlichen einem Mehrfachen ihrer Breite entspricht, und der jeweilige Kronenabschnitt (14b) eines jeden in einer sich dem Umfang annähernden Beziehung zwischen den Kronenabschnitten (25b) von zwei der zweiten axial dazwischenliegenden Abschnitte (25) angeordnet ist, um damit eine zweite Karkassenlage (3b) zu bilden, die radial auf die erste Karkassenlage (3a) nahe an den Kronenabschnitten (13b, 14b, 15b, 25b) aufgelegt ist.

6. Reifen nach Anspruch 2, bei welchem
- die axial inneren Abschnitte (13) zur Bildung einer ersten Karkassenlage (3a) mit einer Umfangsteilung verteilt sind, die im Wesentlichen ihrer Breite entspricht,
- die axial dazwischenliegenden Abschnitte (15) mit einer Umfangsteilung verteilt sind, die einem Mehrfachen ihrer Breite entspricht, und
- die axial äußeren Abschnitte (14) mit einer Umfangsteilung verteilt sind, die einem Mehrfachen ihrer Breite entspricht, und der jeweilige Kronenabschnitt (14b) eines jeden in einer sich dem Umfang annähernden Beziehung zwischen den Kronenabschnitten (15b) von zwei axial dazwischenliegenden Abschnitten (15) angeordnet ist, um eine zweite Karkassenlage (3b) damit zu bilden, die radial auf die erste Karkassenlage (3a) nahe an den Kronenabschnitten (13b, 14b, 15b) aufgelegt ist.

7. Reifen nach Anspruch 2, bei welchem die axial inneren Abschnitte (13), die dazwischenliegenden Abschnitte (15) und die äußeren Abschnitte (14) jeweils mit einer Umfangsverteilungsteilung, die einem Mehrfachen ihrer Breite entspricht, mit einem Zahlenfaktor verteilt sind, der der Reihenzahl der inneren Abschnitte (13), der dazwischenliegenden Abschnitte (15) und der äußeren Abschnitte (14) entspricht, die bei der Bildung der wenigstens einen Karkassenlage vorgesehen sind.

8. Reifen nach Anspruch 7, bei welchem die Kronenabschnitte (13b, 15b, 14b) der einzelnen inneren Abschnitte (13), dazwischenliegenden Abschnitte (15) und äußeren Abschnitte (14) aufeinanderfolgend in einer sich gegenseitig annähernden Beziehung längs ein und derselben Umfangslinie angeordnet sind, wobei die jeweiligen Seitenabschnitte (13a, 15a, 14a) axial voneinander versetzt sind, um wenigstens eine der Elastik-Stützeinlagen (16, 21) in den leeren Räumen oder Spalten aufzunehmen, die zwischen den Seitenabschnitten der inneren Abschnitte (13) und der dazwischenliegenden Abschnitte (15) sowie zwischen den Seitenabschnitten der dazwischenliegenden Abschnitte (15) und den äußeren Abschnitten (14) vorhanden sind.

9. Reifen nach Anspruch 2, bei welchem
- die axial inneren Abschnitte (13) mit einer Umfangsteilung verteilt sind, die im Wesentlichen einem Mehrfachen ihrer Breite entspricht,
- die axial dazwischenliegenden Abschnitte (15) mit einer Umfangsteilung verteilt sind, die im Wesentlichen einem Mehrfachen ihrer Breite entspricht, und der jeweilige Kronenabschnitt (15b) eines jeden am Umfang nahe an dem Kronenabschnitt (13b) eines axial inneren Abschnitts (13) angeordnet ist, und
- die axial äußeren Abschnitte (14) mit einer Umfangsteilung verteilt sind, die im Wesentlichen einem Mehrfachen ihrer Breite entspricht, und jeder mit seinem Kronenabschnitt (14b) in einer sich dem Umfang annähernden Beziehung zwischen dem Kronenabschnitt (13b) eines der axial inneren Abschnitte (13) und dem Kronenabschnitt (15b) eines der axial dazwischenliegenden Abschnitte (15) zur Bildung der wenigstens einen Karkassenlage damit steht.

10. Reifen nach Anspruch 1, bei welchem die axial inneren Abschnitte (13) mit einer Umfangsteilung verteilt sind, die im Wesentlichen einem Mehrfachen ihrer Breite entspricht, wobei der jeweilige Kronenabschnitt (14b) eines jeden der axial äußeren Abschnitte (14) in einer sich dem Umfang annähernden Beziehung zwischen den Kronenabschnitten (13b) von zwei axial inneren Abschnitten (13) angeordnet ist.

11. Reifen nach Anspruch 1, bei welchem die axial inneren Abschnitte (13) und die axial äußeren Abschnitte (14) mit einer Umfangsteilung verteilt sind, die der Breite eines jeden Abschnitts entspricht, um eine erste Karkassenlage (3a) bzw. eine zweite Karkassenlage (3b) zu bilden, die radial auf die erste Karkassenlage (3a) nahe an den Kronenabschnitten (13b, 14b) aufgelegt ist.

12. Reifen nach Anspruch 1, welcher weiterhin ein Paar von zusätzlichen Elastik-Stützeinlagen (20) aufweist, von denen jede an einer axial inneren Position bezogen auf die axial inneren Abschnitte (13) angeordnet ist.

13. Reifen nach Anspruch 1, bei welchem jeder der streifenförmigen Abschnitte (13, 14) sich im Wesentlichen in einer Ebene erstreckt, die parallel zu einer Meridianebene des Reifens versetzt ist, so dass der jeweilige Kronenabschnitt (13b, 14b) bezogen auf eine radiale Bezugsebene, die durch den Übergangspunkt zwischen dem Kronenabschnitt (13b, 14b) und wenigstens einem der entsprechenden Seitenabschnitte (13b, 14b) hindurchgeht, so ausgerichtet ist, dass er einen Winkel mit einem Wert bildet, der sich von der Neigung der Seitenabschnitte (13a, 14a) unterscheidet.

14. Reifen nach Anspruch 13, bei welchem die axial inneren Abschnitte (13) und die axial äußeren Abschnitte (14) in Ablageebenen liegen, die auf jeweils gegenüberliegenden Seiten zu der Meridianebene versetzt sind, so dass wenigstens die Seitenabschnitte (13a, 14a) der axial inneren Abschnitte (13) eine gekreuzte Ausrichtung bezüglich der Seitenabschnitte (13a, 14a) der axial äußeren Abschnitte (14) haben.

15. Reifen nach Anspruch 1, bei welchem wenigstens einer der ringförmigen Verstärkungsaufbauten (4)
- wenigstens ein versteifendes Element (17), das an der wenigstens einen Karkassenlage (3a, 3b) angebracht ist und ein Querschnittsprofil hat, das sich von der Drehachse des Reifens weg erstreckt, und
- wenigstens eine ringförmige am Umfang nicht dehnbare Verankerungseinlage (18) aufweist, die ein Querschnittsprofil mit einer abgeflachten Form hat und sich axial von dem versteifenden Element (17) in eine Richtung weg erstreckt, die zu der geometrischen Drehachse des Reifens hin und weg von der Äquatorialebene (X-X) konvergiert.

16. Reifen nach Anspruch 15, bei welchem das Querschnittsprofil des ringförmigen Verstärkungsaufbaus (4) einen geometrischen Schwerpunkt (G) hat, der sich an einer solchen Position befindet, dass ein axial äußerer Endrand (16) der ringförmigen Verankerungseinlage (18) zu der Drehachse des Reifens hin einer Zugspannung folgend gedrückt wird, die längs der wenigstens einen Karkassenlage (3a, 3b) durch die Wirkung des Aufpumpdrucks des Reifens erzeugt wird.

17. Reifen nach Anspruch 15, bei welchem das Querschnittsprofil des ringförmigen Verstärkungsaufbaus (4) einen geometrischen Schwerpunkt (G) hat, der sich an einer axial äußeren Position bezüglich des versteifenden Elements (17) und an einer axial inneren Position bezüglich eines axial äußeren Endrandes der ringförmigen Verankerungseinlage (18) befindet.

18. Reifen nach Anspruch 15, bei welchem das versteifende Element (17) axial zwischen einer jeweils axial inneren Endlasche (13b) und jeweils einer axial äußeren Endlasche (14b) der wenigstens einen Karkassenlage (3a, 3b) angeordnet ist.

19. Reifen nach Anspruch 15, bei welchem die ringförmige Verankerungseinlage (18) an einem Endabschnitt (14c) einer äußeren Endlasche der Karkassenlage angebracht ist, wobei sich der Endabschnitt axial weg von der Äquatorialebene (X-X) des Reifens erstreckt.

20. Reifen nach Anspruch 19, bei welchem die ringförmige Verankerungseinlage (18) an einer radial äußeren Position bezogen auf den Endabschnitt (14c) der äußeren Endlasche angebracht ist.

21. Reifen nach Anspruch 15, bei welchem die ringförmige Verankerungseinlage (18) im Wesentlichen nahe zu einem radial inneren Rand des versteifenden Elements (17) angeordnet ist.

22. Reifen nach Anspruch 18, welcher weiterhin wenigstens eine zusätzliche ringförmige Verankerungseinlage (20) aufweist, die parallel und radial nahe zu der ringförmigen Verankerungseinlage (18) ist.

23. Reifen nach Anspruch 22, bei welchem die zusätzliche Verankerungseinlage (20) an einer radial äußeren Position bezüglich eines Endabschnitts (13c) der inneren Endlasche angeordnet ist, wobei sich der Endabschnitt axial weg von der Äquatorialebene (X-X) des Reifens erstreckt.

24. Reifen nach Anspruch 23, bei welchem die zusätzliche Verankerungseinlage (20) an einer radial inneren Position bezüglich des Endabschnitts (40c) der äußeren Endlasche angebracht ist.

25. Reifen nach Anspruch 15, welcher weiterhin wenigstens ein zusätzliches am Umfang nicht dehnbares versteifendes Element (19) mit einem Querschnittsprofil aufweist, das sich radial an einer axial inneren Position bezüglich des versteifenden Elements (17) erstreckt.

26. Bereiftes Rad für Fahrzeuge mit einer der Nabe eines Fahrzeugs zuzuordnenden Montagefelge (1a) und mit einem auf der Felge (1a) montierten Reifen (1) mit den Merkmalen, die in einem oder mehreren der vorhergehenden Ansprüche definiert sind.

27. Verfahren zur Herstellung eines selbstabstützenden Reifens für Fahrzeugräder, wobei das Verfahren die Schritte aufweist:
- Vorbereiten eines Karkassenaufbaus (2), der wenigstens eine Karkassenlage (3a, 3b) hat, die mit Endlaschen versehen ist, welche in Eingriff mit jeweiligen ringförmigen Verstärkungsaufbauten (4) stehen, die in einer koaxialen Beziehung zu einer Drehachse des Reifens an Positionen angeordnet sind, die axial voneinander beabstandet sind und von denen jeder in einen Reifenwulst eingeschlossen ist, wobei wenigstens einer der Wulste an einer radial inneren Position eine Auflagefläche (4a) hat, die in einer diametralen Schnittebene des Reifens ein Profil bildet, das zu der Drehachse des Reifens hin und weg von dessen Äquatorialebene (X-X) konvergiert,
- Aufbringen eines Gurtaufbaus (5) auf den Karkassenaufbau (2) an einer radial äußeren Position von ihm,
- Aufbringen eines Laufflächenbandes (8) auf den Gurtaufbau (5) an einer radial äußeren Position von ihm,
- Anbringen eines Paars von Seitenwänden (9) an dem Karkassenaufbau (2) an seitlich gegenüberliegenden Positionen des letzteren, wobei jede der Seitenwände (9) sich zwischen einem der Wulste und einem Seitenrand des Laufflächenbandes erstreckt,
- wobei die Vorbereitung des Karkassenaufbaus (2) die folgenden Schritte aufweist:
-- Anordnen von streifenförmigen Abschnitten (13, 14), von denen jeder in Längsrichtung verlaufende und parallele fadenförmige Elemente aufweist,
-- Ablegen von axial inneren streifenförmigen Abschnitten (13) auf einem torusförmigen Träger (11) am Umfang verteilt, wobei jeder der axial inneren Abschnitte (13) sich in einer U-Form um das Querschnittsprofil des torusförmigen Trägers (11) herum erstreckt, um zwei Seitenabschnitte (13a), die gegenseitig in Axialrichtung beabstandet sind, und einen Kronenabschnitt (13b) zu bilden, der sich in einer radial äußeren Position zwischen den Seitenabschnitten (13a) erstreckt,
-- Anbringen von Elastik-Stützeinlagen (16) an einer axial äußeren Position an den Seitenabschnitten (13a) der axial inneren Abschnitte (13) und zwar jede an einer der Seitenwände, wobei die Elastik-Stützeinlagen (16, 21) jeweils radial innere Spitzen (16a, 21a) nahe an den Wulsten und radial äußere Spitzen (16b, 21b) nahe an den Seitenrändern des Laufflächenbandes (8) aufweisen, und
-- Ablegen axial äußerer streifenförmiger Abschnitte (14) auf dem torusförmigen Träger (11) am Umfang verteilt, wobei jeder der axial äußeren Abschnitte (14) sich in einer U-Form um das Querschnittsprofil des torusförmigen Trägers (11) erstreckt, um zwei Seitenabschnitte (14a), die in Axialrichtung gegenseitig beabstandet sind und von denen sich jeder in einer axial äußeren Position bezüglich einer der Elastik-Stützeinlagen (16) erstreckt, sowie einen Kronenabschnitt (14b) zu bilden, der sich in einer radial äußeren Position zwischen den Seitenabschnitten (14a) erstreckt.

28. Verfahren nach Anspruch 27, bei welchem vor der Ablage der axial äußeren Abschnitte (14) die folgenden weiteren Schritte ausgeführt werden:
- Ablegen von axial dazwischenliegenden streifenförmigen Abschnitten (15) um die Drehachse herum am Umfang verteilt, wobei sich jeder in einer U-Form um das Querschnittsprofil des Karkassenaufbaus (2) erstreckt, um zwei Seitenabschnitte (15a), die in einer axial äußeren Position die Elastik-Stützeinlagen (16) überlappen, und einen Kronenabschnitt (15b) zu bilden, der sich in einer radial äußeren Position zwischen den Seitenabschnitten (15a) erstreckt, und
- Anbringen eines Paars von zusätzlichen Elastik-Stützeinlagen (20) an einer axial äußeren Position an den Seitenabschnitten (15a) der axial dazwischenliegenden Abschnitte (15) vor der Ablage der axial äußeren Abschnitte (14).

29. Verfahren nach Anspruch 28, bei welchem
- die axial inneren Abschnitte (13) mit einer Umfangsverteilungsteilung abgelegt werden, die im Wesentlichen einem Mehrfachen ihrer Breite entspricht,
- die axial dazwischenliegenden Abschnitte (15) mit einer Umfangsverteilungsteilung abgelegt werden, die im Wesentlichen einem Mehrfachen ihrer Breite entspricht, wobei der jeweilige Kronenabschnitt (15b) eines jeden in einer sich dem Umfang annähernden Beziehung zwischen den Kronenabschnitten (13b) von zwei axial inneren Abschnitten (13) angeordnet ist, um eine erste Karkassenlage (3a) damit zu bilden, und
- die axial äußeren Abschnitte (14) mit einer Umfangsverteilungsteilung abgelegt werden, die im Wesentlichen ihrer Breite entspricht, um eine zweite Karkassenlage (3b) damit zu bilden, die radial auf die erste Karkassenlage (3a) aufgelegt ist.

30. Verfahren nach Anspruch 28, bei welchem vor dem Anbringen der zusätzlichen Elastik-Stützeinlage (20) auch der folgende Schritt ausgeführt wird:
- Ablegen von zweiten axial dazwischenliegenden streifenförmigen Abschnitten (25), die am Umfang um die Drehachse verteilt sind und von denen sich jeder in einer U-Form um das Querschnittsprofil des torusförmigen Trägers (11) erstreckt, um zwei Seitenabschnitte (25a), die an einer axial äußeren Position die Seitenabschnitte (15a) der vorher abgelegten ersten axial dazwischenliegenden Abschnitte (15) teilweise überlappen, und einen Kronenabschnitt (25b) zu bilden, der sich in einer radial äußeren Position zwischen den jeweiligen Seitenabschnitten (25a) erstreckt.

31. Verfahren nach Anspruch 30, bei welchem
- die axial inneren Abschnitte (13) mit einer Umfangsverteilungsteilung abgelegt werden, die im Wesentlichen einem Mehrfachen ihrer Breite entspricht,
- die ersten axial dazwischenliegenden Abschnitte (15) mit einer Umfangsverteilungsteilung abgelegt werden, die im Wesentlichen einem Mehrfachen ihrer Breite entspricht, wobei der jeweilige Kronenabschnitt (15b) eines jeden in einer sich dem Umfang annähernden Beziehung zwischen den Kronenabschnitten (13b) von zwei axial inneren Abschnitten (13) angeordnet ist, um eine erste Karkassenlage (3a) damit zu bilden,
- die zweiten axial dazwischenliegenden Abschnitte (25) mit einer Umfangsverteilungsteilung abgelegt werden, die im Wesentlichen einem Mehrfachen ihrer Breite entspricht, und
- die axial äußeren Abschnitte (14) mit einer Umfangsverteilungsteilung abgelegt werden, die im Wesentlichen einem Mehrfachen ihrer Breite entspricht, wobei der jeweilige Kronenabschnitt (14b) eines jeden in einer sich dem Umfang annähernden Beziehung zwischen den Kronenabschnitten (25b) von zwei der zweiten axial dazwischenliegenden Abschnitte (25) angeordnet ist, um eine zweite Karkassenlage (3b) damit zu bilden.

32. Verfahren nach Anspruch 28, bei welchem
- die axial inneren Abschnitte (13) mit einer Umfangsverteilungsteilung abgelegt werden, die im Wesentlichen ihrer Breite entspricht, um eine erste Karkassenlage (3a) zu bilden,
- die axial dazwischenliegenden Abschnitte (15) mit einer Umfangsverteilungsteilung abgelegt werden, die im Wesentlichen einem Mehrfachen ihrer Breite entspricht, und
- die axial äußeren Abschnitte (14) mit einer Umfangsverteilungsteilung abgelegt werden, die im Wesentlichen einem Mehrfachen ihrer Breite entspricht, wobei der jeweilige Kronenabschnitt (14b) eines jeden in einer sich dem Umfang annähernden Beziehung zwischen den Kronenabschnitten (15b) von zwei der dazwischenliegenden Abschnitte (15) angeordnet ist, um eine zweite Karkassenlage (3b) damit zu bilden, die radial auf die erste Karkassenlage (3a) nahe an den Kronenabschnitten (13b, 14b, 15b) aufgelegt ist.

33. Verfahren nach Anspruch 28, bei welchem
- die axial inneren Abschnitte (13) mit einer Umfangsverteilungsteilung abgelegt werden, die im Wesentlichen einem Mehrfachen ihrer Breite entspricht,
- die axial dazwischenliegenden Abschnitte (15) mit einer Umfangsverteilungsteilung abgelegt werden, die im Wesentlichen einem Mehrfachen ihrer Breite entspricht, wobei der jeweilige Kronenabschnitt (15b) eines jeden am Umfang nahe bei dem Kronenabschnitt (13b) eines axial inneren Abschnitts (13) angeordnet ist, und
- die axial äußeren Abschnitte (14) mit einer Umfangsteilung abgelegt werden, die im Wesentlichen einem Mehrfachen ihrer Breite entspricht, wobei der Kronenabschnitt (14b) eines jeden in einer sich dem Umfang annähernden Beziehung zwischen dem Kronenabschnitt (13b) eines der axial inneren Abschnitte (13) und dem Kronenabschnitt (15b) eines der axial dazwischenliegenden Abschnitte (15) angeordnet ist, um die wenigstens eine Karkassenlage damit zu bilden.

34. Verfahren nach Anspruch 27, bei welchem die axial inneren Abschnitte (13) mit einer Umfangsteilung verteilt werden, die im Wesentlichen einem Mehrfachen ihrer Breite entspricht, und die axial äußeren Abschnitte (14) jeweils mit ihrem Kronenabschnitt (14b) in einer sich dem Umfang annähernden Beziehung zwischen den Kronenabschnitten (13b) von zwei axial inneren Abschnitten (13) abgelegt werden.

35. Verfahren nach Anspruch 27, bei welchem die axial inneren Abschnitte (13) mit einer Umfangsteilung verteilt werden, die im Wesentlichen ihrer Breite entspricht, um eine erste Karkassenlage (3a) zu bilden, und die axial äußeren Abschnitte (14) mit einer Umfangsteilung verteilt werden, die im Wesentlichen ihrer Breite entspricht, um eine zweite Karkassenlage (3b) zu bilden, die radial auf die erste Karkassenlage (3a) nahe an den Kronenabschnitten (13b, 14b) aufgelegt wird.

36. Verfahren nach Anspruch 27, welches weiterhin den Schritt aufweist, ein Paar von zusätzlichen Elastik-Stützeinlagen (20) anzuordnen, und zwar jede an einer axial inneren Position bezüglich der axial inneren Abschnitte (13).

37. Verfahren nach Anspruch 27, bei welchem jeder der streifenförmigen Abschnitte (13, 14) in einer Ebene abgelegt wird, die parallel zu der Meridianebene des torusförmigen Trägers (11) versetzt ist.

38. Verfahren nach Anspruch 37, bei welchem die axial inneren Abschnitte (13) und die axial äußeren Abschnitte (14) jeweils in Ablageebenen abgelegt werden, die auf jeweils gegenüberliegenden Seiten zu der Meridianebene so versetzt sind, dass die Seitenabschnitte (13a, 14a) der axial inneren Abschnitte (13) und der axial äußeren Abschnitte (14) entsprechend geneigte Ausrichtungen haben.

39. Verfahren nach Anspruch 27, bei welchem die Fertigung von wenigstens einem der ringförmigen Verankerungsaufbauten (4) die Schritte aufweist:
- Anbringen wenigstens einer ringförmigen am Umfang nicht dehnbaren Verankerungseinlage (18) in einer radial aufeinandergelegten Beziehung mit einem Endabschnitt (14c) wenigstens einer der Endlaschen, wobei die Verankerungseinlage (18) ein Querschnittsprofil mit einer abgeflachten Form hat und sich axial von der entsprechenden inneren Endlasche und von einer Äquatorialebene (X-X) des Reifens weg erstreckt, und
- Anbringen wenigstens eines versteifenden Elements (17) an der wenigstens eine Endlasche, wobei das versteifende Element (17) im Wesentlichen an einer axial inneren Position bezüglich der ringförmigen Verankerungseinlage (18) angeordnet wird und ein Querschnittsprofil hat, das sich von der Drehachse weg erstreckt.

40. Verfahren nach Anspruch 39, bei welchem das Anbringen der ringförmigen Verankerungseinlage (18) **dadurch** erfolgt, dass wenigstens ein fadenförmiges Element in axial nahe beieinander angeordneten konzentrischen Windungen (18a) um den torusförmigen Träger (11) herum gelegt wird.

41. Verfahren nach Anspruch 39, bei welchem das Anbringen der ringförmigen Verankerungseinlage (18) auf die Ablage der axial äußeren Abschnitte (14) folgend ausgeführt wird.

42. Verfahren nach Anspruch 39, bei welchem das Anbringen des versteifenden Elements (17) vor dem Anbringen der ringförmigen Verankerungseinlage (18) ausgeführt wird.

43. Verfahren nach Anspruch 39, bei welchem das Anbringen des wenigstens einen versteifenden Elements (17) vor der Ablage der axial äußeren Abschnitte (14) ausgeführt wird.

44. Verfahren nach Anspruch 39, bei welchem das Anbringen des wenigstens einen versteifenden Elements (17) **dadurch** ausgeführt wird, dass wenigstens ein fadenförmiges Element in radial aufeinandergelegten konzentrischen Windungen (17a) um den torusförmigen Träger (11) herum gelegt wird.

45. Verfahren nach Anspruch 39, welches weiterhin den Schritt aufweist, eine zusätzliche am Umfang nicht dehnbare ringförmige Verankerungseinlage (20) anzubringen, die im Wesentlichen parallel und radial nahe zu der ringförmigen Verankerungseinlage (18) angeordnet wird.

46. Verfahren nach Anspruch 45, bei welchem die zusätzliche Verankerungseinlage (20) auf die Ablage der radial inneren Abschnitte (13) folgend und vor der Ablage der radial äußeren Abschnitte (14) angebracht wird.

47. Verfahren nach Anspruch 45, bei welchem das Anbringen der zusätzlichen Verankerungseinlage (20) **dadurch** ausgeführt wird, dass wenigstens ein fadenförmiges Element in axial nahe beieinander angeordneten konzentrischen Windungen (20a) um den torusförmigen Träger (11) herum gelegt wird.

48. Verfahren nach Anspruch 39, bei welchem vor dem Anbringen des versteifenden Elements (17) das Anbringen wenigstens eines zusätzlichen versteifenden Elements (19) ausgeführt wird, das sich radial in einer axial inneren Position bezüglich des versteifenden Elements erstreckt.

49. Verfahren nach Anspruch 48, bei welchem das Anbringen des zusätzlichen versteifenden Elements (19) vorzugsweise **dadurch** erfolgt, dass wenigstens ein fadenförmiges Element in radial nahe beieinander angeordneten konzentrischen Windungen um den torusförmigen Träger (11) herum gelegt wird.

50. Verfahren nach Anspruch 27, bei welchem jede der Elastik-Stützeinlagen (16, 21) **dadurch** gebildet wird, dass wenigstens ein fortlaufendes streifenförmiges Element aus elastomerem Material so gewickelt wird, dass es Windungen bildet, die axial nahe beieinander und/oder radial aufeinanderliegend um die geometrische Achse des torusförmigen Trägers (11) herum angeordnet werden.

## Revendications

1. Pneu autoporteur pour roues de véhicule, comprenant :
- une structure de carcasse (2) comportant au moins une nappe de carcasse (3a, 3b) pourvue de rebords d'extrémité en prise avec des structures de renforcement annulaires respectives (4) disposées de manière coaxiale avec un axe de rotation du pneu en des positions axialement espacées les unes des autres et incorporées chacune dans un talon de pneu, au moins l'un desdits talons présentant, en une position radialement intérieure de celui-ci, une surface de repos (4a) qui, dans un plan de section diamétral du pneu, définit un profil qui converge vers l'axe de rotation du pneu, à l'écart d'un plan équatorial (X-X) du pneu ;
- une structure de ceinture (5) appliquée à la structure de carcasse (2) en une position radialement extérieure de celle-ci ;
- une bande de roulement (8) appliquée à la structure de ceinture (5) en une position radialement extérieure de celle-ci ;
- au moins une paire de flancs (9) s'étendant chacun entre l'un desdits talons et un bord latéral de la bande de roulement (8), en une position axialement extérieure à la structure de carcasse (2) ;
- au moins une paire d'inserts de support élastique (16, 21) incorporés dans la structure de carcasse (2), chacun au niveau de l'un desdits flancs (9) ;
dans lequel les inserts de support élastique (16, 2 1) ont des sommets radialement intérieurs respectifs (16a, 21a) placés près des talons, et des sommets radialement extérieurs (16b, 21b) placés près des bords latéraux de la bande de roulement (8) ; et
dans lequel ladite au moins une nappe de carcasse (3a, 3b) comprend :
- des sections en bandes axialement intérieures (13) et des sections en bandes axialement extérieures (14), lesdites sections axialement intérieures (13) et axialement extérieures (14) étant réparties de manière périphérique autour dudit axe de rotation et s'étendant chacune en une configuration en U autour du profil de section transversale de la structure de carcasse (2), pour définir deux parties latérales (13a, 14a) mutuellement espacées dans une direction axiale et une partie sommet (13b, 14b) s'étendant en une position radialement extérieure entre les parties latérales (13a, 14a),
- lesdits inserts de support élastique (16) étant intercalés chacun axialement entre les parties latérales (13a) des sections axialement intérieures (13) et les parties latérales (14a) des sections axialement extérieures (14).

2. Pneu selon la revendication 1, comprenant en outre :
- des sections en bandes axialement intermédiaires (15) réparties de manière périphérique autour dudit axe de rotation et s'étendant chacune en une configuration en U autour du profil de section transversale de la structure de carcasse (2) pour définir deux parties latérales (15a) se chevauchant, en une position axialement extérieure, lesdits inserts de support élastique (16) et une partie sommet (15b) s'étendant en une position radialement extérieure entre les parties latérales (15a) ;
- une paire d'inserts de support élastique auxiliaires (20) intercalés chacun axialement entre les parties latérales (15a) des sections axialement intermédiaires (15) et les parties latérales (14a) des sections axialement extérieures (4).

3. Pneu selon la revendication 2, dans lequel :
- les sections axialement intérieures (13) sont réparties selon un pas périphérique qui correspond à un multiple de leur largeur,
- les sections axialement intermédiaires (15) sont réparties selon un pas périphérique qui correspond à un multiple de leur largeur et chacune a la partie sommet (15b) respective intercalée en relation approchante périphérique entre la partie sommet (13b) de deux sections axialement intérieures (13), pour définir une première nappe de carcasse (3a) avec celle-ci,
- et les sections axialement extérieures (14) sont réparties selon un pas périphérique qui correspond substantiellement à leur largeur, pour définir une deuxième nappe de carcasse (3b) superposée radialement sur la première nappe de carcasse (3a) près desdites parties sommets (13b, 14b).

4. Pneu selon la revendication 2, comprenant en outre des deuxièmes sections en bandes axialement intermédiaires (25) réparties de manière périphérique autour dudit axe de rotation et s'étendant chacune en une configuration en U autour du profil de section transversale de la structure de carcasse (2) pour définir deux parties latérales (25a) se chevauchant partiellement, en une position axialement extérieure, les parties latérales (15a) des premières sections axialement intermédiaires (15), et une partie sommet (25b) s'étendant en une position radialement extérieure entre les parties latérales respectives (25a).

5. Pneu selon la revendication 4, dans lequel :
- les sections axialement intérieures (13) sont réparties selon un pas périphérique qui correspond substantiellement à un multiple de leur largeur,
- les premières sections axialement intermédiaires (15) sont réparties selon un pas périphérique qui correspond substantiellement à un multiple de leur largeur, chacune avec la partie sommet (15b) respective intercalée en relation approchante périphérique entre les parties sommets (13b) de deux sections axialement intérieures (13), pour définir une première nappe de carcasse (3a) avec celles-ci,
- les deuxièmes sections axialement intermédiaires (25) sont réparties selon un pas périphérique qui correspond substantiellement à un multiple de leur largeur,
- et les sections axialement extérieures (14) sont réparties selon un pas périphérique qui correspond substantiellement à un multiple de leur largeur, chacune avec la partie sommet (14b) respective intercalée en relation approchante périphérique entre les parties sommets (25b) de deux desdites sections axialement intermédiaires (25),pour définir une deuxième nappe de carcasse (3b) avec celles-ci, laquelle deuxième nappe de carcasse est superposée radialement sur la première nappe de carcasse (3a) près desdites parties sommets (13b, 14b, 15b, 25b).

6. Pneu selon la revendication 2, dans lequel :
- les sections axialement intérieures (13) sont réparties selon un pas périphérique qui correspond substantiellement à leur largeur, pour définir une première nappe de carcasse (3a),
- les sections axialement intermédiaires (15) sont réparties selon un pas périphérique qui correspond à un multiple de leur largeur,
- et les sections axialement extérieures (14) sont réparties selon un pas périphérique qui correspond substantiellement à un multiple de leur largeur, et chacune a la partie sommet (14b) respective intercalée en relation approchante périphérique entre les parties sommets (15b) de deux sections axialement intermédiaires (15),pour définir une deuxième nappe de carcasse (3b) avec celles-ci, laquelle deuxième nappe de carcasse est superposée radialement sur la première nappe de carcasse (3a) près desdites parties sommets (13b, 14b, 15b).

7. Pneu selon la revendication 2, dans lequel les sections respectivement axialement intérieures (13), intermédiaires (15) et extérieures (14) sont réparties selon un pas périphérique qui est un multiple de leur largeur, d'après un facteur numérique qui correspond au nombre de séries de sections intérieure (13), intermédiaire (15) et extérieure (14) prévues pour former ladite au moins une nappe de carcasse.

8. Pneu selon la revendication 7, dans lequel les parties sommets (13b, 15b, 14b) des sections individuelles intérieures (13), intermédiaires (15) et extérieures (14) sont intercalées séquentiellement en relation d'approche mutuelle le long d'une seule et même ligne périphérique, tandis que les parties latérales respectives (13a, 15a, 14a) sont décalées axialement les unes des autres pour pouvoir recevoir au moins l'un desdits inserts de support élastique (16, 21) dans les espaces vides ou interstices qui existent entre les parties latérales des sections intérieures (13) et intermédiaires (15) et entre les parties latérales des sections intermédiaires (15) et extérieures (14).

9. Pneu selon la revendication 2, dans lequel :
- les sections axialement intérieures (13) sont réparties selon un pas périphérique qui correspond substantiellement à un multiple de leur largeur,
- les sections axialement intermédiaires (15) sont réparties selon un pas périphérique qui correspond substantiellement à un multiple de leur largeur, et chacune a la partie sommet (15b) respective disposée circonférentiellement près de la partie sommet (13b) d'une section axialement intérieure (13),
- et les sections axialement extérieures (14) sont réparties selon un pas périphérique qui correspond substantiellement à un multiple de leur largeur, chacune avec sa partie sommet (14b) en relation approchante périphérique entre la partie sommet (13b) de l'une des sections axialement intérieures (13) et la partie sommet (15b) de l'une des sections axialement intermédiaires (15), pour définir ladite au moins une nappe de carcasse avec celles-ci.

10. Pneu selon la revendication 1, dans lequel les sections axialement intérieures (13) sont réparties selon un pas périphérique qui correspond substantiellement à un multiple de leur largeur, les sections axialement extérieures (14) ayant chacune la partie sommet (14b) respective intercalée en relation approchante périphérique entre les parties sommets (13b) de deux sections axialement intérieures (13).

11. Pneu selon la revendication 1, dans lequel les sections axialement intérieures (13) et les sections axialement extérieures (14) sont réparties selon un pas périphérique qui correspond à la largeur de chaque section, pour définir une première nappe de carcasse (3a) et une deuxième nappe de carcasse (3b) respectivement, la deuxième nappe de carcasse (3b) étant superposée radialement sur la première nappe de carcasse (3a) près desdites parties sommets (13b, 14b).

12. Pneu selon la revendication 1, comprenant en outre une paire d'inserts de support élastique auxiliaires (20) disposés chacun en une position axialement intérieure par rapport aux sections axialement intérieures (13).

13. Pneu selon la revendication 1, dans lequel chacune desdites sections en bandes (13, 14) s'étend substantiellement dans un plan parallèlement décalé par rapport à un plan méridien du pneu, de sorte que la partie sommet respective (13b, 14b), par rapport à un plan de référence radial qui passe par le point de transition entre la partie sommet (13b, 14b) et au moins l'une des parties latérales correspondantes (13a, 14a), est orientée de telle manière qu'elle forme un angle d'une valeur différente par rapport à l'inclinaison des parties latérales (13a, 14a).

14. Pneu selon la revendication 13, dans lequel les sections axialement intérieures (13) et les sections axialement extérieures (14) se trouvent dans des plans de pose qui, en des côtés respectivement opposés, sont décalés par rapport audit plan méridien, de sorte qu'au moins les parties latérales (13a, 14a) des sections axialement intérieures (13) ont une orientation croisée par rapport aux parties latérales (13a, 14a) des sections axialement extérieures (14).

15. Pneu selon la revendication 1, dans lequel au moins l'une desdites structures de renforcement annulaires (4) comprend :
- au moins un élément de renfort (17) appliqué contre ladite au moins une nappe de carcasse (3a, 3b) et ayant un profil de section transversale qui s'étend à l'écart de l'axe de rotation du pneu ;
- au moins un insert d'ancrage annulaire circonférentiellement inextensible (18) ayant un profil de section transversale de structure aplatie, s'étendant axialement à l'écart de l'élément de renfort (17) dans une direction qui converge vers l'axe de rotation géométrique du pneu, à l'écart du plan équatorial (X-X) de celui-ci.

16. Pneu selon la revendication 15, dans lequel le profil de section transversale de la structure de renforcement annulaire (4) a un centre de gravité géométrique (G) situé en une position telle qu'un bord d'extrémité axialement extérieur (16) dudit insert d'ancrage annulaire (19) est poussé vers l'axe de rotation du pneu suite à une tension générée dans ladite au moins une nappe de carcasse (3a, 3b) par l'effet de la pression de gonflage du pneu.

17. Pneu selon la revendication 15, dans lequel le profil de section transversale de la structure de renforcement annulaire (4) a un centre de gravité géométrique (G) situé en une position axialement extérieure par rapport audit élément de renfort (17) et en une position axialement intérieure par rapport à un bord d'extrémité axialement extérieur dudit insert d'ancrage annulaire (18).

18. Pneu selon la revendication 15, dans lequel ledit élément de renfort (17) est positionné axialement entre un rebord d'extrémité axialement intérieur respectif (13b) et un rebord d'extrémité axialement extérieur respectif (14b) de ladite au moins une nappe de carcasse (3a, 3b).

19. Pneu selon la revendication 15, dans lequel ledit insert d'ancrage annulaire (18) est appliqué contre une partie d'extrémité (14c) d'un rebord d'extrémité extérieur de la nappe de carcasse, ladite partie d'extrémité s'étendant axialement à l'écart du plan équatorial (X-X) du pneu.

20. Pneu selon la revendication 19, dans lequel ledit insert d'ancrage annulaire (18) est appliqué en une position radialement extérieure par rapport à ladite partie d'extrémité (14c) du rebord d'extrémité extérieur.

21. Pneu selon la revendication 15, dans lequel ledit insert d'ancrage annulaire (18) est disposé substantiellement près d'un bord radialement intérieur de l'élément de renfort (17).

22. Pneu selon la revendication 18, comprenant en outre au moins un insert d'ancrage annulaire auxiliaire (20) parallèle à et radialement proche dudit insert d'ancrage annulaire (18).

23. Pneu selon la revendication 22, dans lequel ledit insert d'ancrage auxiliaire (20) est appliqué en une position radialement extérieure par rapport à une partie d'extrémité (13c) dudit rebord d'extrémité intérieur, s'étendant axialement à l'écart d'un plan équatorial (X-X) du pneu.

24. Pneu selon la revendication 23, dans lequel ledit insert d'ancrage auxiliaire (20) est appliqué en une position radialement intérieure par rapport à ladite partie d'extrémité (14c) du rebord d'extrémité extérieur.

25. Pneu selon la revendication 15, comprenant en outre au moins un élément de renfort auxiliaire circonférentiellement inextensible (19) ayant un profil de section transversale qui s'étend en une position axialement intérieure par rapport audit élément de renfort (17).

26. Roue équipée d'un pneu pour véhicules comprenant une jante (1a) à associer à un moyeu d'un véhicule et un pneu (1) monté sur ladite jante (1a), ledit pneu (1) comprenant les caractéristiques définies dans l'une ou plusieurs des revendications précédentes.

27. Procédé de fabrication d'un pneu autoporteur pour roues de véhicule, comprenant les étapes consistant à :
- préparer une structure de carcasse (2) comportant au moins une nappe de carcasse (3a, 3b) pourvue de rebords d'extrémité en prise avec des structures de renforcement annulaires respectives (4) disposées de manière coaxiale avec un axe de rotation du pneu en des positions axialement espacées les unes des autres et incorporées chacune dans un talon de pneu, au moins l'un desdits talons présentant, en une position radialement intérieure de celui-ci, une surface de repos (4a) qui, dans un plan de section diamétral du pneu, définit un profil qui converge vers l'axe de rotation du pneu, à l'écart d'un plan équatorial (X-X) du pneu ;
- appliquer une structure de ceinture (5) sur la structure de carcasse (2) en une position radialement extérieure de celle-ci ;
- appliquer une bande de roulement (8) sur la structure de ceinture (5) en une position radialement extérieure de celle-ci ;
- appliquer une paire de flancs (9) sur la structure de carcasse (2), en des positions latéralement opposées de cette dernière, chacun desdits flancs (9) s'étendant entre l'un desdits talons et un bord latéral de la bande de roulement,
dans lequel la préparation de la structure de carcasse (2) comprend les étapes consistant à :
- agencer des sections en bandes (13, 14), chacune comprenant des éléments de type fil longitudinaux et parallèles ;
- déposer des sections en bandes axialement intérieures (13) réparties de manière périphérique sur le support toroïdal (11), chacune desdites sections axialement intérieures (13) s'étendant en une configuration en U autour du profil de section transversale du support toroïdal (11), pour définir deux parties latérales (13a) qui sont mutuellement espacées dans une direction axiale, et une partie sommet (13b) s'étendant en une position radialement extérieure entre les parties latérales (13a) ;
- appliquer lesdits inserts de support élastique (16), en une position axialement extérieure, sur les parties latérales (13a) des sections axialement intérieures (13), un sur chacun desdits flancs, lesdits inserts de support élastique (16, 21) ayant des sommets radialement intérieurs respectifs (16a, 21a) placés près des talons, et des sommets radialement extérieurs (16b, 21b) placés près des bords latéraux de la bande de roulement (8) ;
- déposer des sections en bandes axialement extérieures (14) réparties de manière périphérique sur le support toroïdal (11), chacune desdites sections axialement extérieures (14) s'étendant en une configuration en U autour du profil de section transversale du support toroïdal (11), pour définir deux parties latérales (14a) mutuellement espacées dans une direction axiale, chacune s'étendant en une position axialement extérieure par rapport à l'un des inserts de support élastique (16), et une partie sommet (14b) s'étendant en une position radialement extérieure entre les parties latérales (14a).

28. Procédé selon la revendication 27, dans lequel, avant la pose des sections axialement extérieures (14), sont exécutées les étapes supplémentaires consistant à :
- déposer des sections en bandes axialement intermédiaires (15) réparties de manière périphérique autour dudit axe de rotation et s'étendant chacune en une configuration en U autour du profil de section transversale de la structure de carcasse (2) pour définir deux parties latérales (15a) chevauchant, en une position axialement extérieure, lesdits inserts de support élastique (16), et une partie sommet (15b) s'étendant en une position radialement extérieure entre les parties latérales (15a) ;
- appliquer une paire d'inserts de support élastique auxiliaires (20), en une position axialement extérieure, sur les parties latérales (15a) des sections axialement intermédiaires (15), avant la pose des sections axialement extérieures (14).

29. Procédé selon la revendication 28, dans lequel :
- les sections axialement intérieures (13) sont déposées selon un pas de répartition périphérique qui correspond substantiellement à un multiple de leur largeur,
- les sections axialement intermédiaires (15) sont déposées selon un pas de répartition périphérique qui correspond substantiellement à un multiple de leur largeur, chacune avec la partie sommet (15b) respective intercalée en relation approchante périphérique entre les parties sommets (13b) de deux sections axialement intérieures (13), pour définir une première nappe de carcasse (3a) avec celles-ci,
- et les sections axialement extérieures (14) sont déposées selon un pas de répartition périphérique qui correspond substantiellement à leur largeur, pour définir une deuxième nappe de carcasse (3b) avec celles-ci, laquelle nappe de carcasse est superposée radialement sur la première nappe de carcasse (3a).

30. Procédé selon la revendication 28, dans lequel, avant l'application dudit insert de support élastique auxiliaire (20), est également exécutée l'étape consistant à :
- déposer des deuxièmes sections en bandes axialement intermédiaires (25) réparties de manière périphérique autour dudit axe de rotation et s'étendant chacune en une configuration en U autour du profil de section transversale du support toroïdal (11), pour définir deux parties latérales (25a) chevauchant partiellement, en une position axialement extérieure, les parties latérales (15a) des premières sections axialement intermédiaires (15) déposées au préalable, et une partie sommet (25b) s'étendant en une position radialement extérieure entre les parties latérales respectives (25a).

31. Procédé selon la revendication 30, dans lequel :
- les sections axialement intérieures (13) sont déposées selon un pas de répartition périphérique qui correspond substantiellement à un multiple de leur largeur,
- les premières sections axialement intermédiaires (15) sont déposées selon un pas de répartition périphérique qui correspond substantiellement à un multiple de leur largeur, chacune ayant la partie sommet (15b) respective intercalée en relation approchante périphérique entre les parties sommets (13b) de deux sections axialement intérieures (13), pour définir une première nappe de carcasse (3a) avec celles-ci,
- les deuxièmes sections axialement intermédiaires (25) sont déposées selon un pas de répartition périphérique qui correspond substantiellement à un multiple de leur largeur,
- et les sections axialement extérieures (14) sont déposées selon un pas de répartition périphérique qui correspond substantiellement à un multiple de leur largeur, chacune ayant la partie sommet (14b) respective intercalée en relation approchante périphérique entre les parties sommets (25b) de deux desdites sections axialement intermédiaires (25), pour définir une deuxième nappe de carcasse (3b) avec celles-ci.

32. Procédé selon la revendication 28, dans lequel :
- les sections axialement intérieures (13) sont déposées selon un pas de répartition périphérique qui correspond substantiellement à leur largeur, pour définir une première nappe de carcasse (3a),
- les sections axialement intermédiaires (15) sont déposées selon un pas de répartition périphérique qui correspond substantiellement à un multiple de leur largeur,
- et les sections axialement extérieures (14) sont déposées selon un pas de répartition périphérique qui correspond substantiellement à un multiple de leur largeur, chacune ayant la partie sommet (14b) respective intercalée en relation approchante périphérique entre les parties sommets (15b) de deux desdites sections intermédiaires (15), pour définir une deuxième nappe de carcasse (3b) avec celles-ci, laquelle nappe de carcasse est superposée radialement sur la première nappe de carcasse (3a) près desdites parties sommets (13b, 14b, 15b).

33. Procédé selon la revendication 28, dans lequel :
- les sections axialement intérieures (13) sont déposées selon un pas de répartition périphérique qui correspond substantiellement à un multiple de leur largeur,
- les sections axialement intermédiaires (15) sont déposées selon un pas de répartition périphérique qui correspond substantiellement à un multiple de leur largeur, chacune ayant la partie sommet (15b) respective disposée circonférentiellement près de la partie sommet (13b) d'une section axialement intérieure (13),
- et les sections axialement extérieures (14) sont déposées selon un pas périphérique qui correspond substantiellement à un multiple de leur largeur, chacune ayant sa partie sommet (14b) en relation approchante périphérique entre la partie sommet (13b) de l'une des sections axialement intérieures (13) et la partie sommet (15b) de l'une des sections axialement intermédiaires (15), pour définir ladite au moins une nappe de carcasse avec celles-ci.

34. Procédé selon la revendication 27, dans lequel les sections axialement intérieures (13) sont réparties selon un pas périphérique qui correspond substantiellement à un multiple de leur largeur, les sections axialement extérieures (14) étant déposées chacune avec la partie sommet (14b) en relation approchante périphérique entre les parties sommet (13b) de deux sections axialement intérieures (13).

35. Procédé selon la revendication 27, dans lequel les sections axialement intérieures (13) sont réparties selon un pas périphérique qui correspond substantiellement à leur largeur pour définir une première nappe de carcasse (3a), et les sections axialement extérieures (14) sont réparties selon un pas périphérique qui correspond substantiellement à leur largeur pour définir une deuxième nappe de carcasse (3b) superposée radialement sur la première nappe de carcasse (3a) près desdites parties sommets (13b, 14b).

36. Procédé selon la revendication 27, comprenant en outre l'étape consistant à agencer une paire d'inserts de support élastique auxiliaires (20), chacun en une position axialement intérieure par rapport aux sections axialement intérieures (13).

37. Procédé selon la revendication 27, dans lequel chacune desdites sections en bandes (13, 14) est déposée dans un plan décalé parallèlement à un plan méridien du support toroïdal (11).

38. Procédé selon la revendication 37, dans lequel les sections axialement intérieures (13) et les sections axialement extérieures (14) sont déposées respectivement dans des plans de pose qui sont décalés par rapport audit plan méridien sur des côtés respectivement opposés, de sorte que les parties latérales (13a, 14a) des sections axialement intérieures (13) et axialement extérieures (14) ont des orientations respectivement inclinées.

39. Procédé selon la revendication 27, dans lequel la formation d'au moins l'une desdites structures d'ancrage annulaires (4) comprend les étapes consistant à :
- appliquer au moins un insert d'ancrage annulaire circonférentiellement inextensible (18) en relation superposée radiale avec une partie d'extrémité (14c) d'au moins l'un desdits rebords d'extrémité, ledit insert d'ancrage (18) ayant un profil de section transversale de structure aplatie, s'étendant axialement à l'écart du rebord d'extrémité intérieur correspondant et à l'écart d'un plan équatorial (X-X) du pneu ;
- appliquer au moins un élément de renfort (17) contre ledit au moins un rebord d'extrémité, ledit élément de renfort (17) étant placé substantiellement en une position axialement intérieure par rapport audit insert d'ancrage annulaire (18) et ayant un profil de section transversale qui s'étend à l'écart dudit axe de rotation.

40. Procédé selon la revendication 39, dans lequel l'application dudit insert d'ancrage annulaire (18) se fait en enroulant au moins un élément de type fil en spires concentriques (18a) disposées axialement près les unes des autres autour du support toroïdal (11).

41. Procédé selon la revendication 39, dans lequel l'application dudit insert d'ancrage annulaire (18) est exécutée après la pose des sections axialement extérieures (14).

42. Procédé selon la revendication 39, dans lequel l'application de l'élément de renfort (17) est exécutée avant l'application de l'insert d'ancrage annulaire (18).

43. Procédé selon la revendication 39, dans lequel l'application dudit au moins un élément de renfort (17) est exécutée avant la pose des sections axialement extérieures (14).

44. Procédé selon la revendication 39, dans lequel l'application dudit au moins un élément de renfort (17) est exécutée en enroulant au moins un élément de type fil en spires concentriques (17a) qui sont superposées radialement autour du support toroïdal (11).

45. Procédé selon la revendication 39, comprenant en outre l'étape consistant à appliquer un insert d'ancrage annulaire auxiliaire circonférentiellement inextensible (20), disposé substantiellement parallèlement et radialement près dudit insert d'ancrage annulaire (18).

46. Procédé selon la revendication 45, dans lequel ledit insert d'ancrage auxiliaire (20) est appliqué après la pose des sections radialement intérieures (13) et avant la pose des sections radialement extérieures (14).

47. Procédé selon la revendication 45, dans lequel l'application dudit insert d'ancrage auxiliaire (20) se fait en enroulant au moins un élément de type fil en spires concentriques (20a) disposées axialement près les unes des autres autour du support toroïdal (11).

48. Procédé selon la revendication 39, dans lequel avant d'appliquer ledit élément de renfort (17), est exécutée l'application d'au moins un élément de renfort auxiliaire (19) qui s'étend radialement en une position axialement intérieure par rapport à l'élément de renfort lui-même.

49. Procédé selon la revendication 48, dans lequel l'application dudit élément de renfort auxiliaire (19) se fait de préférence en enroulant au moins un élément de type fil en spires concentriques (19a) disposées radialement près les unes des autres autour du support toroïdal (11).

50. Procédé selon la revendication 27, dans lequel chacun desdits inserts de support élastique (16, 21) est formé en enroulant au moins un élément continu en bande de matériau élastomère de manière à former des spires qui sont disposées axialement près les unes des autres ou superposées radialement les unes sur les autres autour de l'axe géométrique du support toroïdal (11).
